# EUROPÄISCHE PATENTSCHRIFT

(11) **EP 3 127 800 B1**
(45) Veröffentlichungstag und Bekanntmachung des Hinweises auf die Patenterteilung: **11.03.2020**
(21) Anmeldenummer: 16001725.7
(22) Anmeldetag: 03.08.2016
(51) Int. Cl.: B62M 9/137

(54) **VORDERE UMWERFEREINRICHTUNG FÜR EINE FAHRRADKETTENSCHALTUNG**
FRONT DERAILLEUR DEVICE OF A CHAIN TRANSMISSION FOR A BICYCLE
DISPOSITIF A DERAILLEUR AVANT POUR UN DERAILLEUR DE VELO

(30) Priorität: 06.08.2015 DE 102015010311
(43) Veröffentlichungstag der Anmeldung: 08.02.2017
(73) Patentinhaber: SRAM Deutschland GmbH, 97424 Schweinfurt (DE)
(72) Erfinder: Düweling, Sebastian, 97453 Schonungen/OT Mainberg (DE); Engel, Markus, 88316 Isny im Allgäu (DE)

(56) Entgegenhaltungen:
- EP-A2- 1 314 636
- DE-A1-102014 007 566
- JP-U- S5 757 194

## Beschreibung

Die vorliegende Erfindung betrifft eine vordere Umwerfereinrichtung für eine Fahrradkettenschaltung, umfassend:
- ein Rahmenfixierteil zur Anbringung an einem Fahrradrahmen,
- eine relativ zum Rahmenfixierteil verschwenkbare Gelenkanordnung, und
- einen über die verschwenkbare Gelenkanordnung relativ zu dem Rahmenfixierteil verschwenkbaren Kettenkäfig zum Führen und Verlagern der Fahrradkette,
wobei die Gelenkanordnung wenigstens zwei Gelenkstreben umfasst, die relativ zu dem Rahmenfixierteil sowie relativ zu dem Kettenkäfig um Lagerstifte und diesen Lagerstiften zugeordnete Schwenkachsen drehbar verlagerbar sind, wobei die Schwenkachsen im Wesentlichen parallel zueinander verlaufen im montierten Zustand der Umwerfereinrichtung an einem Fahrrad im Wesentlichen vertikal ausgerichtet sind oder zu einer vertikal verlaufenden Achse um maximal 30° geneigt sind, wobei die Umwerfereinrichtung über ein Steuerkabel ansteuerbar ist.

Derartige vordere Umwerfereinrichtungen sind aus dem Stand der Technik bekannt. Beispielsweise zeigen die Dokumente DE 10 2014 010 367 A1 und DE 10 2014 007 566 A1 vordere Umwerfereinrichtungen dieses Typs. Diese sind derart ausgebildet, dass die Umwerfereinrichtung in eine bestimmte Betriebsstellung über einen Federmechanismus vorgespannt ist, beispielsweise in diejenige Betriebsstellung der Fahrradkette, bei der diese sich auf dem kleinsten Kettenrad befindet. Dabei ist der Kettenkäfig in einer Stellung, in der er die Fahrradkette auf dem kleinsten Kettenrad hält. Um die Umwerfereinrichtung zu betätigen, sodass der Kettenkäfig über die Gelenkanordnung derart verschwenkt wird, dass die Fahrradkette auf das nächst größere Kettenrad bis hin zum größten Kettenrad (sofern die Fahrradkettenschaltung mehr als zwei Kettenräder umfasst) verlagert wird, wird bei derartigen herkömmlichen vorderen Umwerfereinrichtungen über einen Seilzug eine Betätigungskraft auf die Umwerfereinrichtung ausgeübt. Diese Betätigungskraft ist groß genug, dass sie die Vorspannkraft überwindet und so eine Verlagerung des Kettenkäfigs in die gewünschte Betriebsstellung bewirkt. Dokument DE102014007566A1 zeigt den Oberbegriff der unabhängigen Ansprüche 1, 2 und 3.

Ein wesentlicher Aspekt derartiger vorderer Umwerfereinrichtungen besteht in der geometrischen Anordnung der relativ zum Rahmenfixierteil verschwenkbaren Gelenkanordnung. Üblicherweise werden Gelenkanordnungen mit zwei parallelen verschwenkbaren Hebelarmen verwendet, wobei jeder Hebelarm jeweils mit einem Ende verschwenkbar am Rahmenfixierteil und mit seinem anderen Ende verschwenkbar am Kettenkäfig gelagert ist. Insgesamt ergibt sich eine Art Parallelogrammgetriebe, sodass der Kettenkäfig in vorbestimmter Ausrichtung auf einer Kreisbahn verlagert werden kann. Die beiden oben genannten Dokumente zeigen Anordnungen, bei denen der Kettenkäfig in der eingangs bezeichneten Weise in einer im wesentlichen horizontalen Ebene oder in einer zur Horizontalen leicht geneigten Ebene seitwärts verschwenkt wird. Man spricht in diesem Zusammenhang auch von "Side-Swing"-Umwerfereinrichtungen.

Derartige "Side-Swing"-Umwerfereinrichtungen sind seit langem aus dem Stand der Technik bekannt, beispielsweise aus den Dokumenten EP 0 042 274 A2 oder EP 0 104 110 B1.

Ein wesentlicher Vorteil solcher "Side-Swing"-Umwerfereinrichtungen besteht darin, dass diese mit ihren mechanischen Komponenten im Wesentlichen seitlich des Rahmenrohres angeordnet werden können. Gerade bei modernen Fahrrädern mit Rahmengeometrien mit kurzer Kettenstrebe und großem Laufraddurchmesser steht hinter dem Sattelrohr des Rahmens verhältnismäßig wenig Platz zur Verfügung. Dies gilt sowohl für die mechanischen Komponenten der Umwerfereinrichtung selbst als auch für Komponenten der Kabelführung zur Führung des Steuerkabels, mit dem die Umwerfereinrichtung angesteuert wird.

Alternativ zu "Side-Swing"-Umwerfereinrichtungen sind Umwerfereinrichtungen bekannt, bei denen die Verschwenkung des Kettenkäfigs in vertikaler Richtung erfolgt, so genannte "Top-Swing"-Anordnungen. Eine derartige vordere Umwerfereinrichtung ist beispielsweise in dem Dokument US 4,613,319 gezeigt und beschrieben. Bei dieser Anordnung wird der Kettenkäfig aus einer unteren Position oberhalb des kleinsten Kettenrades nach oben zum größten Kettenrad hin geschwenkt. Eine ähnliche Anordnung ist in dem Dokument US 4,030,374 gezeigt und beschrieben. Auch diese Anordnung ist als "Top-Swing"-Anordnung ausgebildet. Dieses Dokument zeigt die Besonderheit, dass an einer der Gelenkstreben der Gelenkanordnung eine Blattfeder angeschraubt ist, die über die Gelenkstrebe hinausragt und sich in federnder Weise an einem Ausleger abstützt. Auch diese Lösung ist raumgreifend und hat sich daher in der Praxis nicht durchgesetzt.

Ein weiterer wesentlicher Aspekt moderner Umwerfereinrichtungen besteht in der Art der Zuführung bzw. Abführung des Steuerkabels. Aufgrund der immer komplexer werdenden Rahmengeometrien sind herkömmliche Führungswege des Steuerkabels, beispielsweise entlang dem Sattelrohr, häufig nicht mehr vorteilhaft.

Es ist eine Aufgabe der vorliegenden Erfindung, eine vordere Umwerfereinrichtung der eingangs bezeichneten Art bereitzustellen, die bei einfachem und kostengünstigem Aufbau sowie zuverlässiger Funktionsweise nur wenig Bauraum erfordert und die eine vorteilhafte Führung des Steuerkabels ermöglicht.

Diese Aufgabe wird durch eine vordere Umwerfereinrichtung der eingangs bezeichneten Art gelöst, bei der vorgesehen ist, dass das Steuerkabel über eine an dem Rahmenfixierteil vorgesehene Kabelführungseinrichtung relativ zum Fahrradrahmen führbar ist. Ferner ist bei dieser Ausgestaltung der Erfindung vorgesehen, dass das Steuerkabel über eine Kabelfixiereinrichtung an der Umwerfereinrichtung, vorzugsweise durch Klemmung, festlegbar ist, wobei die Kabelfixiereinrichtung am Rahmenfixierteil vorgesehen ist. Darüber hinaus ist bei dieser Ausgestaltung der Erfindung vorgesehen, dass das Steuerkabel über eine Kabelumlenkeinrichtung zwischen der Kabelfixiereinrichtung und der Kabelführungseinrichtung geführt ist, wobei die Kabelumlenkeinrichtung an einer der Gelenkstreben der Gelenkanordnung oder an dem Kettenkäfig angeordnet ist.

Diese erfindungsgemäße Ausgestaltung der Umwerfereinrichtung bietet den Vorteil, dass die Komponenten zur Fixierung des Steuerkabels als auch zur Führung und Ableitung des Steuerkabels direkt am Rahmenfixierteil angebracht werden können. Dies hat den Vorteil, dass die Montage des Steuerkabels an demjenigen Bauteil erfolgen kann, das aufgrund seiner Fixierung am Fahrradrahmen etwaigen Montagekräften und im Betrieb auftretenden Kräften am besten standhalten kann. Darüber hinaus lässt sich das Rahmenfixierteil aufgrund seiner Fixierfunktion relativ massiv ausgestalten. Die sonstigen Bauteile, die bei dieser Ausgestaltung der Erfindung nicht für die Fixierung des Steuerkabels und dessen Führung zur Ableitung vorgesehen sind, lassen sich dadurch einfacher gewichtsmäßig optimieren. Ein weiterer Vorteil dieser erfindungsgemäßen Ausgestaltung liegt darin, dass das Steuerkabel von der Umwerfereinrichtung relativ zum Rahmen hin in verschiedener Ausrichtung je nach Bedarf geführt werden kann. Hierzu kann die am Rahmenfixierteil vorgesehene Führungseinrichtung für den jeweiligen Anwendungsfall angepasst werden oder beweglich ausgebildet sein.

Ferner kann erfindungsgemäß eine Umwerfereinrichtung der eingangs bezeichneten Art vorgesehen sein, bei der das Steuerkabel über eine an dem Rahmenfixierteil vorgesehene Kabelführungseinrichtung relativ zum Fahrradrahmen führbar ist, und Bei der das Steuerkabel über eine Kabelfixiereinrichtung festlegbar ist, wobei die Kabelfixiereinrichtung am Kettenkäfig vorgesehen ist. Ähnlich wie bei der vorangehend beschriebenen Erfindungsvariante sieht auch diese Ausführungsform vor, das Rahmenfixierteil mit der Kabelführungseinrichtung zu versehen. Abweichend von der vorangehend beschriebenen Erfindungsvariante ist jedoch die Kabelfixiereinrichtung nicht am Rahmenfixierteil sondern am Kettenkäfig vorgesehen. Dies bietet den Vorteil, dass die Kabelfixiereinrichtung an dem ohnehin relativ ausladend ausgebildeten Kettenkäfig angeordnet werden kann, sodass hierfür an anderen Komponenten kein zusätzlicher Bauraum geschaffen werden muss. Dadurch lässt sich eine relativ kompakte Ausgestaltung mit einer vorteilhaften Kabelführung erreichen.

Darüber hinaus kann erfindungsgemäß eine Umwerfereinrichtung der eingangs bezeichneten Art vorgesehen sein, bei der das Steuerkabel über eine an dem Kettenkäfig vorgesehene Kabelführungseinrichtung relativ zum Fahrradrahmen führbar ist, und bei der das Steuerkabel über eine Kabelfixiereinrichtung festlegbar ist, wobei die Kabelfixiereinrichtung am Kettenkäfig oder am Rahmenfixierteil vorgesehen ist. Diese Ausführungsvariante der Erfindung sieht vor, die Kabelführungseinrichtung am Kettenkäfig anzubringen, sodass sich diese zusammen mit dem Kettenkäfig bewegt. In Anlehnung an die vorangehend geschilderten Ausführungsbeispiele lässt sich dann die Kabelfixiereinrichtung je nach Anwendungsfall vorteilhaft je nach Bedarf am KettenRäfig oder am Rahmenfixierteil anbringen.

Alle drei grundlegenden Ausführungsvarianten der vorliegenden Erfindung haben den übereinstimmenden Vorteil, dass sich eine Umwerfereinrichtung bereitstellen lässt, die bei funktionsmäßig optimiertem und kompaktem Aufbau je nach Bedarf eine variable Kabelführung relativ zum Rahmen zulässt.

Gemäß einer Weiterbildung der Erfindung kann ferner vorgesehen sein, dass die Kabelführungseinrichtung an einem der Lagerstifte angebracht und mit diesem relativ zum Rahmenfixierteil schwenkbar gelagert ist. Der Lagerstift ist beweglich in seinen ihm zugeordneten Komponenten gelagert, d.h. im Rahmenfixierteil oder im Kettenkäfig und der jeweils zugeordneten Gelenkstrebe, sodass sich die auf dem jeweiligen Lagerstift angebrachte Kabelführungseinrichtung entsprechend der erforderlichen Richtung des abgehenden Steuerkabels ausrichten kann. Mit anderen Worten erlaubt diese Möglichkeit zur Ausrichtung der Kabelführungseinrichtung eine optimale Führung des Steuerkabels relativ zum Rahmen, jeweils abhängig von der Rahmengeometrie.

Als Steuerkabel werden regelmäßig und üblicherweise sogenannte Bowdenzüge verwendet, d.h. Anordnungen, bei denen ein Steuerdraht bzw. Steuerkabel in einer zur Kraftübertragung nutzbaren Kabelhülle geführt ist. Zur Fixierung eines solchen Steuerkabels, insbesondere des in der Kabelhülle geführten Steuerdrahts, kann erfindungsgemäß vorgesehen sein, dass die Kabelfixiereinrichtung einen in eine Fixierfläche einschraubbaren Fixierbolzen aufweist, wobei vorzugsweise die Fixierfläche zur Erhöhung der Montagefreundlichkeit relativ zur Fahrradlängsebene geneigt ist. Als Fixierbolzen lässt sich beispielsweise eine Kopfschraube verwenden. Die Fixierfläche kann beispielsweise in Form eines massiv ausgebildeten rampenartigen Vorsprungs an der jeweiligen Komponente der Umwerfereinrichtung vorgesehen sein, beispielsweise am Rahmenfixierteil oder am Kettenkäfig. In diesen rampenartigen Vorsprung kann ein Gewindeloch eingebracht sein. Die Neigung der Fixierfläche ist je nach Einbausituation vorzugsweise derart gewählt, dass der Fixierbolzen zur Montage dem Monteur zugewandt und für diesen leicht zugänglich ist. Beispielsweise kommt eine Neigung im Bereich von 15-45° relativ zu einer horizontalen Ebene infrage.

Zur Erhöhung der Klemmwirkung zur Fixierung des Steuerkabels kann vorgesehen sein, dass die Kabelfixiereinrichtung eine Klemmbacke aufweist, mit der das Steuerkabel über den Fixierbolzen fixierbar ist. Dadurch lässt sich das Steuerkabel über einen verhältnismäßig langen Steuerkabelabschnitt sicher festklemmen.

Eine Weiterbildung der Erfindung sieht vor, dass das Rahmenfixierteil eine Kabelfunktionsfläche aufweist, an der die Kabelfixiereinrichtung und/oder die Kabelführungseinrichtung ausgebildet sind. Diese Ausgestaltung der Erfindung erlaubt es, beispielsweise die obere Stirnfläche des Rahmenfixierteils mit Vorkehrungen für die Kabelfixierung und die Kabelführung auszugestalten. Dies erlaubt eine besonders vorteilhafte Kabelführung zwischen dem Punkt, an dem das Steuerkabel fixiert ist, über einen Abschnitt, an dem das Steuerkabel zur Betätigung der Umwerfereinrichtung kraftübertragend angreift bis hin zur Kabelführungseinrichtung, wo das Steuerkabel an die Umwerfereinrichtung angeschlossen bzw. von dieser abgeführt wird.

Hinsichtlich der der Führung des Steuerkabels und seines Anschlusses an die Umwerfereinrichtung kann ferner vorgesehen sein, dass die Kabelführungseinrichtung einen Kabelhüllenstützabschnitt aufweist, an dem sich eine Kabelhülle des Steuerkabels kraftübertragend abstützt. In diesem Zusammenhang ist es möglich, dass der Kabelhüllenstützabschnitt eine Durchgangsöffnung aufweist, durch die sich ein aus der Kabelhülle vorspringender Abschnitt des Steuerkabels hindurch erstreckt. Während sich die Kabelhülle an dem Kabelhüllenstützabschnitt abstützt, erstreckt sich das Steuerkabel durch die Durchgangsöffnung zu weiteren Funktionskomponenten der Umwerfereinrichtung, insbesondere zur Kraftübertragung und Fixierung.

Ein weiterer wesentlicher Aspekt moderner Umwerfereinrichtungen besteht darin, eine möglichst sichere Befestigung am Fahrradrahmen zu ermöglichen. Zwei alternative Ausgestaltungen sehen in diesem Zusammenhang vor, dass das Rahmenfixierteil zur Fixierung am Fahrradrahmen mit Befestigungsöffnungen versehen ist, die im Wesentlichen oberhalb oder im Wesentlichen unterhalb eines Lagerabschnitts zur drehbaren Lagerung einer der Gelenkstreben angeordnet ist. Es ist also möglich, die Fixierung des Rahmenfixierteils am Fahrradrahmen entweder oberhalb der Lagerung der Gelenkanordnung in einer sogenannten HDM-Anordnung (englisch: high derailleur mount) oder unterhalb der Lagerung der Gelenkanordnung in einer sogenannten LDM-Anordnung (englisch: low derailleur mount) anzubringen. Dies hängt davon ab, welche Fixiermöglichkeit an den jeweiligen Fahrradrahmen vorgesehen ist.

Zur Feineinstellung kann vorgesehen sein, dass - unabhängig von einer HDM-Anordnung oder einer LDM-Anordnung - wenigstens eine der Befestigungsöffnungen als Langloch ausgebildet ist, über das die Umwerfereinrichtung relativ zum Fahrradrahmen bei der Fixierung lageverstellbar ist. So ist es möglich, die Umwerfereinrichtung zunächst locker über eine nicht als Langloch ausgebildete Befestigungsöffnung am Fahrradrahmen zu fixieren und dann die endgültige Position der Umwerfereinrichtung durch Verlagern derselben relativ zum Fahrradrahmen im Rahmen des durch das Langloch vorgegebenen Spiels einzustellen.

Alternativ zu einer derartigen Ausgestaltung ist es auch möglich, die erfindungsgemäße Umwerfereinrichtung im Bereich ihres Rahmenfixierteils mit einer Klemmvorrichtung zu versehen, beispielsweise einer Klemmschelle. Diese Erfindungsvariante kommt dann zum Einsatz, wenn am Fahrradrahmen keine besonderen Vorkehrungen zur Fixierung der vorderen Umwerfereinrichtung vorgesehen sind.

Eine Weiterbildung der Erfindung sieht im Zusammenhang mit der Gestaltung des Rahmenfixierteils vor, dass der Lagerabschnitt eine Ausnehmung aufweist, in der ein freies Ende einer der Gelenkstreben über einen Lagerstift schwenkbar aufgenommen ist.

Eine Weiterbildung der Erfindung sieht vor, dass die Kabelumlenkeinrichtung einen Umlenkkörper umfasst, der zum Führen und Umlenken des Steuerkabels eine Umlenkkurve aufweist. Grundsätzlich ist es möglich, das Steuerkabel unmittelbar von der Kabelführungseinrichtung zur Kabelfixiereinrichtung zu führen und die Kabelfixiereinrichtung an einer der Gelenkstreben oder am Kettenkäfig anzuordnen, sodass Zugkräfte über das Steuerkabel unmittelbar auf eine der relativ zum Rahmenfixierteil beweglichen Komponenten ausgeübt werden können. Die Rückstellkräfte werden über einen Federmechanismus erzielt. Eine solche Anordnung kann jedoch hinsichtlich der Kraftübertragung oder/und Kabelführung nicht immer vorteilhaft sein, weshalb dann eine Kabelumlenkung mit der vorstehend genannten Kabelumlenkeinrichtung vorzuziehen ist.

Im Zusammenhang mit der Bereitstellung einer Kabelumlenkeinrichtung kann vorgesehen sein, dass die Umlenkkurve zum Führen des Steuerkabels mit wenigstens einem vorspringenden Randabschnitt oder/und mit einem Führungstunnel versehen ist. Das Vorsehen wenigstens eines vorspringenden Randabschnitts oder/und eines geschlossenen Führungstunnels sorgt für eine sichere Führung des Steuerkabels und verhindert, dass dieses im Betrieb unerwünscht von der Umlenkkurve bzw. dem Umlenkkörper abgleitet. Auch können dadurch unerwünschte Relativbewegungen zwischen dem Steuerkabel und der Umlenkkurve verhindert werden.

Eine Weiterbildung der Erfindung sieht vor, dass sich die Umlenkkurve über einen Winkel von wenigstens 90°, vorzugsweise über einen Winkel von wenigstens 180° erstreckt. Dadurch kann eine teilweise oder vollständige Richtungsumkehr des Steuerkabels erzielt werden. Eine Umlenkung um etwa 180° kommt beispielsweise dann bevorzugt zum Einsatz, wenn sowohl die Kabelfixiereinrichtung als auch die Kabelführungseinrichtung an ein und derselben Komponente, beispielsweise am Rahmenfixierteil angeordnet sind. Dann kann es vorteilhaft sein, zur Kraftübertragung das Steuerkabel über einen an einer der Gelenkstreben oder am Kettenkäfig angeordneten Umlenkkörper zu führen und mit diesem das Steuerkabel um ca. 180° umzulenken.

Alternativ zu einer Ausgestaltung der Kabelumlenkeinrichtung mit einem starren Umlenkkörper kann vorgesehen sein, dass die Kabelumlenkeinrichtung wenigstens eine Umlenkrolle zum Führen des Steuerkabels aufweist. In diesem Zusammenhang kann ferner vorgesehen sein, dass die Umlenkrolle an dem Rahmenfixierteil oder an einer der Gelenkstreben oder an dem Kettenkäfig, vorzugsweise drehbar, angeordnet ist.

Zusätzlich oder alternativ zu einem Umlenkkörper oder/und einer Umlenkrolle sieht eine Weiterbildung der Erfindung im Zusammenhang mit der Kabelführung vor, dass wenigstens einem Lagerstift eine Aufnahme zur Führung des Steuerkabels zugeordnet ist, wobei die Aufnahme vorzugsweise L-förmig mit einem L-Schenkel zur einseitigen Führung oder U-förmig mit zwei gegenüberliegenden U-Schenkeln zur zweiseitigen Führung ausgebildet ist. Dabei ist es möglich, einen Lagerstift mit einem axialen Vorsprung auszubilden, der beispielsweise im Bereich der Kabelfunktionsfläche vorsteht, dieser axiale Vorsprung kann derart geometrisch geformt sein, dass er mit einer Fläche das Steuerkabel einseitig abstützt oder er kann mit einem Schlitzprofil versehen sein, sodass er dem Steuerkabel beidseitig Halt gibt. Dabei sieht eine Weiterbildung der Erfindung vor, dass die das Steuerkabel einseitig oder beidseitig stützenden Flächen gekrümmt sind, um dann, wenn sich das Steuerkabel in den verschiedenen Betriebsstellungen der Umwerfereinrichtung in seiner Winkelstellung relativ zu dem Lagerstift ändert, die jeweiligen stützenden Flächen auch bei sich ändernden Winkelstellungen des Steuerkabels eine dem Steuerkabel flächige Anlage bieten.

Hinsichtlich der Ausgestaltung der Gelenkanordnung kann gemäß einer Weiterbildung der Erfindung vorgesehen sein, dass eine erste Gelenkstrebe der Gelenkstreben mit einem zentralen Gelenkstrebenabschnitt und zwei vom zentralen Gelenkstrebenabschnitt in entgegengesetzte Richtungen vorspringenden Lagergabeln ausgebildet ist. In diesem Zusammenhang ist es erfindungsgemäß möglich, dass die Lagergabeln im Wesentlichen zueinander fluchten, sodass die erste Gelenkstrebe der Gelenkstreben im wesentlichen H-förmig ausgebildet ist, wobei an einem zentralen Vorsprung der Gelenkstrebe der Umlenkkörper oder die Umlenkrolle angeordnet ist. Alternativ hierzu kann erfindungsgemäß auch vorgesehen sein, dass die Lagergabeln an dem zentralen Gelenkstrebenabschnitt in vertikaler Richtung zueinander versetzt sind.

Ferner sieht eine Weiterbildung der Erfindung im Zusammenhang mit der Ausgestaltung der Gelenkanordnung vor, dass eine erste Gelenkstrebe der Gelenkstreben mit einem Ausleger ausgebildet ist, an dem der Umlenkkörper oder die Umlenkrolle angeordnet ist.

Um eine Vorspannkraft zu erzielen, die die Umwerfereinrichtung in eine vorbestimmte Betriebsstellung vorspannt, wobei in Folge einer Betätigung des Steuerkabels eine Verlagerung des Kettenkäfigs der Umwerfereinrichtung durch eine Verschwenkung der Gelenkanordnung gegen die Vorspannkraft vorgesehen ist, kann erfindungsgemäße ferner vorgesehen sein, dass wenigstens einem Lagestift eine Torsionsfeder zugeordnet ist, die die Gelenkanordnung in eine vorbestimmte Stellung vorspannt. Bei dieser Ausführungsvariante kann die Torsionsfeder beispielsweise in Form einer Schraubenfeder um den betreffenden Lagerstift herumgeführt sein und sich mit einem Ende an der Gelenkstrebe und mit ihrem anderen Ende an dem Rahmenfixierteil oder an dem Kettenkäfig abstützen. Dadurch kann eine torsionale Vorspannkraft erreicht werden. Die Torsionsfeder kann in der vorbestimmten Betriebsstellung bereits vorgespannt sein oder erst bei Auslenkung aus dieser vorbestimmten Betriebsstellung unter Torsionsspannung geraten. In beiden Fällen wirkt die Torsionsfeder rückstellend.

Zusätzlich oder alternativ zum Vorsehen einer Torsionsfeder kann erfindungsgemäß vorgesehen sein, dass wenigstens eine der Gelenkstreben zumindest abschnittsweise von einer Blattfeder gebildet ist, die die Gelenkanordnung in eine vorbestimmte Stellung vorgespannt.

Es hat sich gezeigt, dass es nicht erforderlich ist, die Gelenkstreben der Gelenkanordnung vollständig steif auszubilden und zusätzliche Federelemente, wie etwa Schraubenfedern oder eine zusätzliche Blattfeder vorzusehen. Stattdessen haben die Erfinder auch erkannt, dass es zum Aufbringen der für den Betrieb erforderlichen Federkräfte möglich ist, wenigstens eine der Gelenkstreben zumindest abschnittsweise als federndes Element auszugestalten, sodass dieses sozusagen ohne zusätzliche Bauelemente und damit raumsparend die für den Betrieb der Umwerfereinrichtung erforderlichen Federkräfte integral selbst aufbringt und auch Führungseigenschaften übernimmt. Dadurch kann Bauraum eingespart werden, der bei herkömmlichen Umwerfereinrichtungen für zusätzliche Federelemente, wie Schraubenfedern oder Blattfedern vorgesehen werden muss. Ferner kann dadurch der Aufbau der Umwerfereinrichtung erheblich vereinfacht werden, weil Aufhängungsbereiche oder Anbringabschnitte für zusätzliche Federelemente weggelassen werden können. Ferner ist auch die Verschleißanfälligkeit und die Möglichkeit zur Reinigung derartiger Umwerfereinrichtungen durch die Erfindung verbessert.

Dabei kann die Blattfeder aus einem Federstahl, einem Composite-Material oder aus einem organischen Material hergestellt sein. Maßgeblich für die Auswahl eines geeigneten Materials sind dessen Eigenschaften hinsichtlich Elastizität, Dauerbelastbarkeit und Lebensdauer. Die Blattfeder kann zumindest mit einem Ende an dem Rahmenfixierteil oder an dem Kettenkäfig über ein Einspannlager fest eingespannt sein. Zusätzlich oder alternativ ist es bei dieser Ausführungsvariante der Erfindung möglich, dass das Einspannlager ein Spannelement aufweist, mit dem die Blattfeder jeweils über eine Einspannlänge in dem Einspannlager fixierbar ist.

Eine Weiterbildung der Erfindung sieht vor, dass die Gelenkanordnung zwei Gelenkstreben aufweist, die jeweils zumindest abschnittsweise von einer Blattfeder gebildet sind, wobei die erste Gelenkstrebe mit ihrem einen Ende an dem Rahmenfixierteil über ein Einspannlager fest eingespannt ist und mit ihrem anderen Ende an dem Kettenkäfig verschwenkbar gelagert ist, und wobei die zweite Gelenkstrebe mit ihrem einen Ende an dem Rahmenfixierteil verschwenkbar gelagert ist und mit ihrem anderen Ende an dem Kettenkäfig fest eingespannt ist. Mit anderen Worten sind bei dieser Ausführungsvariante der Erfindung beide Gelenkstreben zumindest abschnittsweise von einer Blattfeder gebildet und jeweils wechselseitig am Kettenkäfig bzw. am Rahmenfixierteil angebracht. Dadurch wird die elastische Deformation der jeweiligen zumindest abschnittsweise als Blattfeder ausgebildeten Gelenkstrebe an dem dem Rahmenfixierteil zugeordneten Einspannlager und an dem dem Kettenkäfig zugeordneten Einspannlager zum Erzielen der (Vor-)Spannkraft ausgenützt.

Ferner kann im Zusammenhang mit dieser Ausgestaltung der Erfindung vorgesehen sein, beide Gelenkstreben an beiden Enden fest einzuspannen. Dies kann jeweils über Einspannlager der vorstehend beschriebenen Art erfolgen. Alternativ zu einer festen Einspannung an beiden Enden jeder der Gelenkstreben kann erfindungsgemäß eine feste Einspannung der Blattfedern lediglich an einem Ende vorgesehen sein.

Eine Weiterbildung der Erfindung sieht vor, dass zwischen dem Rahmenfixierteil und dem Kettenkäfig ein drehbar gelagerter Umlenkbolzen vorgesehen ist, auf dem sich wenigstens eine der Blattfedern im Falle einer Deformation abstützt.

Eine Weiterbildung der Erfindung sieht vor, dass die Umwerfereinrichtung wenigstens eine, vorzugsweise zwei, Einstellschrauben aufweist, wobei nach Maßgabe der gewählten Stellung der wenigstens einen, vorzugsweise zwei Einstellschrauben die Stellung des Kettenkäfigs wählbar ist, wobei die Längsachse der wenigstens einen, vorzugsweise zwei Einstellschrauben im Wesentlichen horizontal verläuft oder zur Horizontalen um einen Winkel von 15° bis 60°, vorzugsweise um einen Winkel von etwa 45°, geneigt ist. Auch in diesem Zusammenhang soll eine für einen Mechaniker möglichst einfach zugängliche Anordnung der Einstellschrauben erreicht werden, die zugleich eine sichere und dauerhafte Einstellung der Funktion der Umwerfereinrichtung ermöglicht. Mit dieser Einstellung werden die Betriebspositionen der Umwerfereinrichtung justiert und auf die Lage der zugeordneten vorderen Kettenräder abgestimmt. Dabei ist es erfindungsgemäß möglich, dass die wenigstens eine Einstellschraube in das Rahmenfixierteil oder in eine der Gelenkstreben zur Einstellung des Kettenkäfigs einschraubbar ist.

Wie eingangs diskutiert besteht ein wesentlicher Aspekt der vorliegenden Erfindung darin, das Steuerkabel vorteilhaft von der erfindungsgemäßen Umwerfereinrichtung zum Fahrradrahmen hin zu führen. Beispielsweise sieht die vorliegende Erfindung vor, das Steuerkabel bezüglich der üblichen Fahrtrichtung des Fahrrads von der Umwerfereinrichtung weg nach vorne zum Fahrradrahmen hin zu führen. In diesem Zusammenhang kann erfindungsgemäß vorgesehen sein, dass das die Kabelführungseinrichtung dazu ausgebildet ist, in einem am Fahrradrahmen montierten Betriebszustand der Umwerfereinrichtung das Steuerkabel um einen Winkel von 5° bis 45°, vorzugsweise um einen Winkel von etwa 20° relativ zur Horizontalen nach unten geneigt, von der Umwerfereinrichtung weg zum Fahrradrahmen hin zu führen. Dadurch wird erreicht, dass das Steuerkabel nicht über einen längeren Abschnitt frei ohne Rahmenanbindung, störend von der Umwerfereinrichtung weg verläuft.

Die Erfindung wird im Folgenden beispielhaft anhand der beiliegenden Figuren erläutert. Es stellen dar:
- Fig. 1: eine perspektivische Ansicht einer vorderen Umwerfereinrichtung einer ersten Ausführungsform der Erfindung;
- Fig. 2: eine perspektivische Ansicht der vorderen Umwerfereinrichtung gemäß der ersten Ausführungsform der Erfindung aus einem anderen Blickwinkel und mit eingezeichnetem Steuerkabel;
- Fig. 3: eine Draufsicht auf die vorderen Umwerfereinrichtung gemäß der ersten Ausführungsform der Erfindung;
- Fig. 4: eine perspektivische Ansicht aus einem Blickwinkel von schräg oben einer vorderen Umwerfereinrichtung gemäß einer zweiten Ausführungsform der Erfindung;
- Fig. 5: eine perspektivische Ansicht der vorderen Umwerfereinrichtung gemäß der zweiten Ausführungsform der Erfindung aus einem Blickwinkel von schräg seitlich;
- Fig. 6: eine perspektivische Ansicht der vorderen Umwerfereinrichtung gemäß der zweiten Ausführungsform der Erfindung aus einem Blickwinkel von schräg unten;
- Fig. 7: eine perspektivische Ansicht aus einem Blickwinkel von schräg oben einer vorderen Umwerfereinrichtung gemäß einer dritten Ausführungsform der Erfindung;
- Fig. 8: eine perspektivische Ansicht der vorderen Umwerfereinrichtung gemäß einer vierten Ausführungsform der Erfindung aus einem Blickwinkel von schräg seitlich;
- Fig. 9: eine perspektivische Ansicht der vorderen Umwerfereinrichtung gemäß einer fünften Ausführungsform der Erfindung;
- Fig. 10: eine weitere perspektivische Ansicht der vorderen Umwerfereinrichtung gemäß der fünften Ausführungsform der Erfindung aus einem anderen Blickwinkel;
- Fig. 11: eine Draufsicht auf die vordere Umwerfereinrichtung gemäß der fünften Ausführungsform der Erfindung;
- Fig. 12: eine Seitenansicht auf die vordere Umwerfereinrichtung gemäß der fünften Ausführungsform der Erfindung;
- Fig. 13: eine perspektivische Ansicht der vorderen Umwerfereinrichtung gemäß einer sechsten Ausführungsform der Erfindung;
- Fig. 14: eine Vorderansicht auf die vordere Umwerfereinrichtung gemäß der sechsten Ausführungsform der Erfindung;
- Fig. 15: eine Seitenansicht auf die vordere Umwerfereinrichtung gemäß der sechsten Ausführungsform der Erfindung;
- Fig. 16: eine Draufsicht auf die vordere Umwerfereinrichtung gemäß der sechsten Ausführungsform der Erfindung;
- Fig. 17: eine Seitenansicht auf die vordere Umwerfereinrichtung gemäß einer siebten Ausführungsform der Erfindung;
- Fig. 18: eine perspektivische Ansicht der vorderen Umwerfereinrichtung gemäß der siebten Ausführungsform der Erfindung;
- Fig. 19: eine Vorderansicht der vorderen Umwerfereinrichtung gemäß einer achten Ausführungsform der Erfindung;
- Fig. 20: eine perspektivische Explosionsdarstellung der vorderen Umwerfereinrichtung gemäß der achten Ausführungsform der Erfindung;
- Fig. 21: eine Draufsicht der vorderen Umwerfereinrichtung gemäß der achten Ausführungsform der Erfindung in Explosionsdarstellung; und
- Fig. 22: eine schematische Darstellung eines Fahrrads zur Erläuterung der Einbausituation einer erfindungsgemäßen vorderen Umwerfereinrichtung.

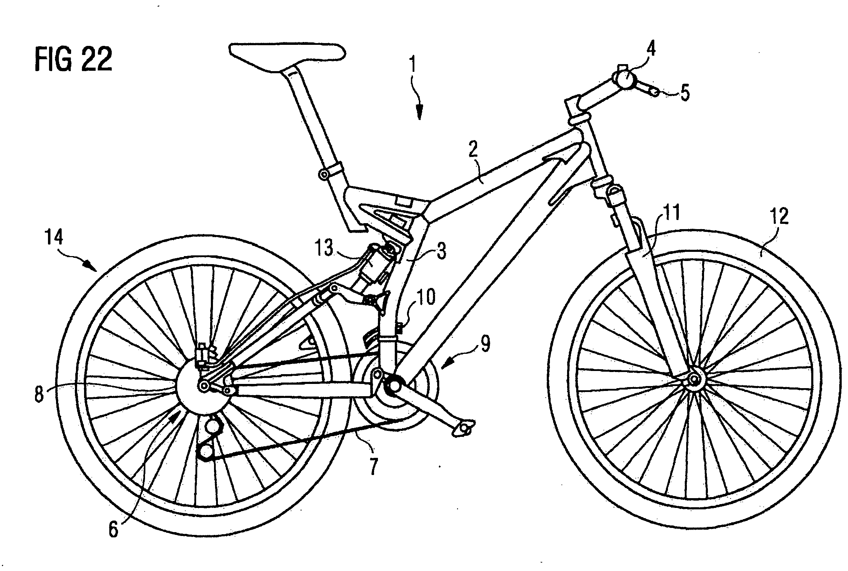

Figur 22 zeigt schematisch ein Fahrrad vom Typ eines Mountainbikes, das allgemein mit der Ziffer 1 bezeichnet ist. Das Fahrrad weist einen Rahmen 2 auf mit einem Sattelrohr 3. Ferner ist an dem Rahmen ein Lenker 4 vorgesehen, mit Betätigungseinrichtungen 5, über die sowohl eine Bremsenanordnung (nicht näher gezeigt) als auch eine Fahrradkettenschaltung betätigbar ist. In bekannter Weise weist die Fahrradkettenschaltung ein hinteres Schaltwerk 6 auf, über das eine Kette 7 auf einem hinteren Ritzelsatz 8 verlagert werden kann. Ferner ist eine vordere Kettenradanordnung 9 mit im Beispielsfall drei Kettenrädern vorgesehen, wobei die Kette 7 über eine vordere Umwerfereinrichtung 10 zwischen den Kettenrädern verlagerbar ist. Ferner erkennt man eine Federgabel 11, in der ein Vorderrad 12 federnd gelagert ist. Darüber hinaus erkennt man eine über einen Dämpfer 13 federnd gelagerte Hinterradanordnung 14.

Die vorliegende Erfindung betrifft die vordere Umwerfereinrichtung 10, die in Figur 22 nur angedeutet ist. Man erkennt aber, dass aufgrund der federnd gelagerten Hinterradanordnung 14 und aufgrund der komplexen Rahmengeometrie bei derartigen Fahrrädern besondere Aufmerksamkeit der Konstruktion der vorderen Umwerfereinrichtung 10 zukommt.

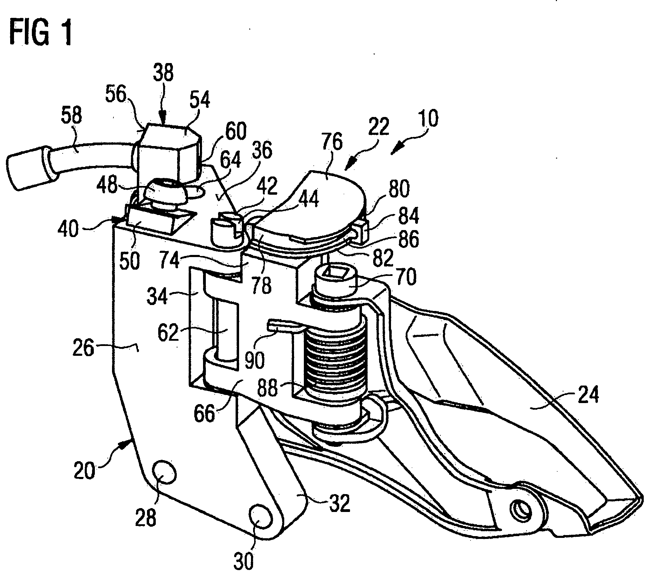

In Figur 1 ist eine erfindungsgemäße Umwerfereinrichtung gemäß einem ersten Ausführungsbeispiel gezeigt und allgemein mit 10 bezeichnet. Die vordere Umwerfereinrichtung 10 umfasst ein massiv ausgebildetes Rahmenfixierteil 20, das zur Fixierung an einem Fahrradrahmen vorgesehen ist. An dem Rahmenfixierteil 20 ist eine Gelenkanordnung 22 schwenkbar gelagert, an deren vom Rahmenfixierteil 20 abgewandten Bereich ein Kettenkäfig 24 schwenkbar gelagert ist. Der Kettenkäfig 24 dient zur Führung und zur Verlagerung der Fahrradkette 7.

Das Rahmenfixierteil 20 weist eine einer Befestigungsfläche des Fahrradrahmens im Bereich des Sattelrohrs 3 zugewandte Fixierfläche 26 auf, mit der das Rahmenfixierteil 20 an dem Fahrradrahmen angebracht werden kann. Ferner sind in dem Rahmenfixierteil 20 Befestigungsöffnungen 28, 30 in einem unteren laschenförmigen Bereich 32 des Rahmenfixierteils angeordnet. Dieser untere laschenförmigen Bereich 32 erstreckt sich in der Ausführungsform gemäß Figuren 1 bis 3 unterhalb einer Ausnehmung 34 des Rahmenfixierteils 20. Die Ausnehmung 34 dient der Lagerung eines Teils der Gelenkanordnung 22, worauf im Folgenden noch im Detail eingegangen werden wird. Der untere laschenförmigen Bereich 32 ist gegenüber dem oberen Abschnitt des Rahmenfixierteils 20 nach vorne abgewinkelt, etwa um einen Winkel von 30°. Dies erlaubt eine vorteilhafte Anordnung der beiden Befestigungsöffnungen 28, 30 durch die nicht gezeigte Befestigungsbolzen zur Anbringung an dem Fahrradrahmen einsteckbar sind.

Das Rahmenfixierteil 20 weist in seinem oberen Bereich oberhalb der Ausnehmung 34 eine Kabelfunktionsfläche 36 auf. An dieser sind eine Kabelführungseinrichtung 38 sowie eine Kabelfixiereinrichtung 40 vorgesehen. Zusätzlich ist an der Kabelfunktionsfläche 36 ein zapfenartiger Vorsprung 42 vorgesehen, der in seinem oberen Ende geschlitzt ist, sodass sich ein Führungskanal 44 ausbildet. Der Führungskanal weitet sich an seinen beiden Enden etwas auf und besitzt in seinem mittleren Bereich seine kleinste lichte Weite.

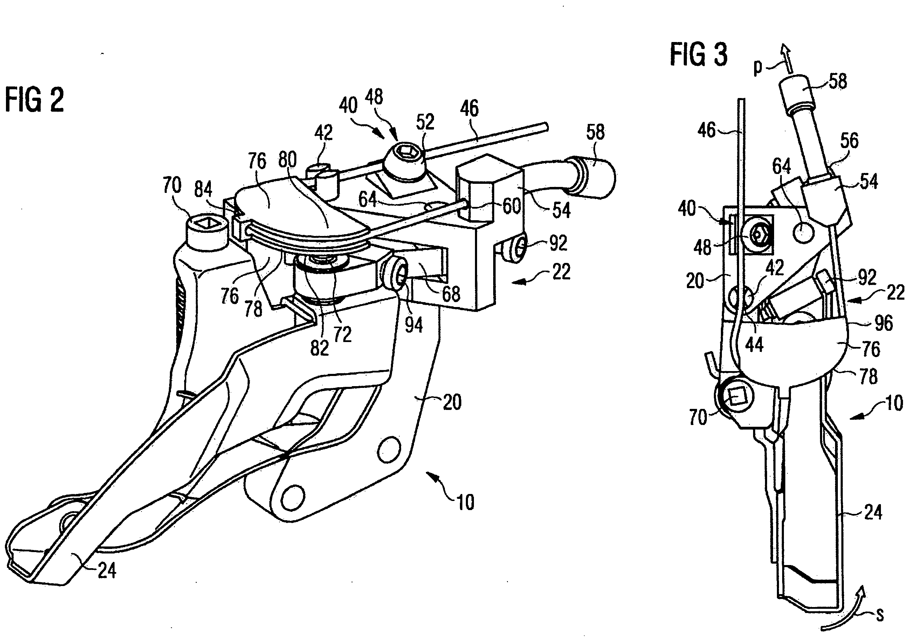

In den Figuren 2 und 3 erkennt man zusätzlich zu den vorstehend beschriebenen Komponenten noch ein Steuerkabel 46. Das Steuerkabel 46 ist an der Kabelfixiereinrichtung 40 über einen Fixierbolzen 48 festgeklemmt. Hierzu ist der Fixierbolzen 48 in eine Gewindebohrung eingeschraubt, die in einer massiven Rampe 50 ausgebildet ist, wobei die Rampe 50 einstückig an dem Rahmenfixierteil 20 ausgebildet ist. Genauer gesagt geht die Gewindebohrung zur Aufnahme des Fixierbolzens 48 von einer um etwa 30° zur Kabelfunktionsfläche 36 geneigten Fixierfläche 52 aus und erstreckt sich in das Material des Rahmenfixierteils 20. Durch die geneigte Fixierfläche 52 lässt sich der Fixierbolzen 48 montagefreundlich einschrauben.

Ferner zeigen die Figuren 1 bis 3, dass die Kabelführungseinrichtung 38 einstückig an dem Rahmenfixierteil 20 in Form eines nach oben vorstehenden Vorsprungs 54 ausgebildet ist. Der Vorsprung 54 weist an seiner in der Montagestellung nach vorne weisenden Vorderseite 56 eine Stützfläche auf, an der sich ein Kabelhüllenanschlussstück 58 des Steuerkabels 46 kraftübertragend abstützen kann. Hierzu kann an der Vorderseite 56 eine das Ende des Kabelhüllenanschlussstücks 58 im wesentlichen formschlüssig aufnehmende Vertiefung ausgebildet sein. Es ist auch möglich, statt des Kabelhüllenanschlussstücks 58 unmittelbar die Kabelhülle des Steuerkabels 46 an den Vorsprung 54 heranzuführen. In den Vorsprung 54 ist eine Durchgangsbohrung 60 vorgesehen, durch die das Steuerkabel 46 durchgeführt wird.

Figur 3 zeigt in der Draufsicht den zapfenartigen Vorsprung 42 mit seinem Führungskanal 44. Man erkennt, dass der Führungskanal 44 in der Erstreckungsrichtung des Steuerkabels 46 jeweils endseitig aufgeweitet ist und in seinem mittleren Bereich seine kleinste lichte Weite aufweist, die im Wesentlichen dem Durchmesser des Steuerkabels 46 entspricht.

Am Rahmenfixierteil 20 sind zum einen innerhalb der Ausnehmung 34 und zum anderen in einem Bereich nahe des Vorsprungs 54 über Lagerstifte 62, 64 zwei Gelenkstreben 66, 68 relativ zum Rahmenfixierteil 20 schwenkbar gelagert. Die Lagerstifte 62, 64 sind hierzu gesichert, jedoch schwenkbar im Rahmenfixierteil 20 aufgenommen. Am oberen Ende des Lagerstifts 62 ist der zapfenartige Vorsprung 42 ausgebildet. Die Gelenkstreben 66, 68 lagern an ihren jeweiligen vom Rahmenfixierteil 20 abgewandten Endabschnitten schwenkbar den Kettenkäfig 24. Auch hierzu sind weitere Lagerstifte vorgesehen, nämlich der Lagerstift 70 zwischen dem Kettenkäfig 24 und der Gelenkstrebe 66 und der Lagerstift 72 zwischen der Gelenkstrebe 68 und dem Kettenkäfig 24. Die Gelenkstreben 66, 68 bilden zusammen mit dem Rahmenfixierteil 20 und dem Kettenkäfig 24 über die Lagerstifte 62, 64, 70, 72 einen in Form eines Parallelogramm ausgebildeten Hebelmechanismus, der es erlaubt, den Kettenkäfig 24 relativ zu dem Rahmenfixierteil 20 im Wesentlichen vertikal, d.h. seitlich ohne Höhenunterschied, zu verschwenken. Die Achsen der Lagerstifte 62, 64, 70, 82 verlaufen zueinander im Wesentlichen parallel und im montierten Zustand der Umwerfereinrichtung 10 im Wesentlichen in vertikaler Richtung, oder um maximal 15° geneigt dazu.

Man erkennt, dass die Gelenkstrebe 66 mit einem H-förmigen Profil ausgebildet ist, von dessen zentralem Mittenbereich sich nach oben ein Vorsprung 74 erstreckt. An diesem Vorsprung 74 ist ein Umlenkkörper 76 vorgesehen. Der Umlenkkörper 76 weist eine Umlenkkurve 78 auf, die sich über etwa 180° um den Umlenkkörper 76 an dessen Außenumfangsfläche herum erstreckt. An dem in Figuren 1 und 2 oberen und unteren Rand des Umlenkkörpers 76 ist entlang der Umlenkkurve 78 jeweils ein rippenartiger Vorsprung 80, 82 vorgesehen, wobei diese Vorsprünge 80, 82 zwischen sich einen Führungsschlitz ausbilden. Am Scheitelpunkt der Umlenkkurve 78 ist ein weiterer Führungsvorsprung 84 mit einer geschlossenen Kabeldurchführung 86 vorgesehen.

Man erkennt in den Figuren 2 und 3, wie das Steuerkabel 46 um den Umlenkkörper 76 herum entlang der Umlenkkurve 78 geführt ist. Insbesondere ist das Steuerkabel 46 ausgehend von seiner Fixierung an der Kabelfixiereinrichtung 40 über den Kanal 44 in dem zapfenartigen Vorsprung 42 geführt, der Teil einer Kabelumlenkeinrichtung bildet, und weiter um den Umlenkkörper 76 herum entlang der Umlenkkurve 78 und durch die Kabeldurchführung 86 um etwas mehr als 180° zu dem Vorsprung 54 der Kabelführungseinrichtung geführt.

Ferner erkennt man in Figur 1, dass um den Lagerstift 70 herum eine Schraubentorsionsfeder 88 geführt ist, die sich mit ihrem oberen Federende 90 an dem zentralen Bereich der H-förmigen Gelenkstrebe 66 abstützt und sich in nicht gezeigter Weise mit ihrem unteren Ende an einer hierfür vorgesehenen Funktionsfläche des Kettenkäfigs 24 abstützt. Die Torsionsfeder 88 ist in dem gezeigten Zustand gemäß Figuren 1 bis 3 bereits vorgespannt und spannt den Kettenkäfig in die gezeigte Stellung vor.

Darüber hinaus erkennt man insbesondere in den Figuren 2 und 3 Einstellschrauben 92 und 94, die zur Feineinstellung der jeweiligen Betriebspositionen der Umwerfereinrichtung 10 dienen. Die Einstellschrauben 92 und 94 sind in zugeordnete Gewindebohrungen in der Gelenkstrebe 68 eingeschraubt und stützen sich mit ihren freien Enden am Rahmenfixierteil 20 je nach Betriebsstellung ab.

Es ist anzumerken, dass der Kettenkäfig 24 in an sich bekannter Weise mehrteilig aus Biegeteilen aufgebaut ist, die durch Vernietung oder andere Verbindungsarten miteinander verbunden sind.

Die Funktionsweise der vorderen Umwerfereinrichtung gemäß Figuren 1-3 ist wie folgt:
Ausgehend von der in den Figuren 1-3 gezeigten Ausgangsstellung, in die der Kettenkäfig durch die Vorspannung der Torsionsfeder 88 vorgespannt ist, kann durch Anlegen einer Zugkraft am Steuerkabel 46 gemäß dem Pfeil P eine Verlagerung des Kettenkäfigs im Rahmen einer Schwenkbewegung entlang dem Pfeil bewirkt werden. Dies wird dadurch erreicht, dass eine entsprechende Zugkraft über den Umlenkkörper 76 in Form einer Hebelkraft an dem Punkt 96 angreift. Diese Hebelkraft bewirkt ein Verschwenken der Gelenkstrebe 66 um den Lagerstift 62 und zwangsgeführt über den Kettenkäfig 24 auch ein Verschwenken der Gelenkstrebe 68 um den Lagerstift 64. Demzufolge verschwenkt sich der Kettenkäfig 24 dem Pfeil S folgend, wodurch die über den Kettenkäfig 24 geführte Kette seitlich verlagert werden kann. Dadurch lässt sich die Kette zwischen verschiedenen Kettenrädern der Kettenradanordnung 9 (siehe Figur 2 20) verlagern.

Bei einer solchen Verschwenkung baut sich mit zunehmender Verschwenkung eine zusätzliche Spannkraft in Torsionsfeder 88 auf. Wird das Steuerkabel 46 wieder freigegeben, so bewegt sich unter der Vorspannung und infolge des Bestrebens der Torsionsfeder 88, sich zu entspannen, die Gelenkanordnung 22 zurück in Richtung ihrer Ausgangsstellung. Über einen geeigneten Rastmechanismus, insbesondere an der zugeordneten Betätigungseinrichtung 5 (siehe Figur 22), wird der Kettenkäfig in den gewünschten, den jeweiligen Kettenrädern zugeordneten Betriebsstellungen solange gehalten, bis eine erneute Betätigung erfolgt.

Die Ausgestaltung gemäß der in den Figuren 1 bis 3 gezeigten Ausführungsform hat den Vorteil, dass sowohl die Kabelführungseinrichtung 38 als auch die Kabelfixiereinrichtung 40 raumsparend am Rahmenfixierteil 20 angebracht sind. Dadurch können diejenigen Komponenten, die im Betrieb erhöhten Betätigungskräften und Klemmkräften ausgesetzt sind, an dem relativ massiv ausgebildeten Rahmenfixierteil 20 vorgesehen werden. Darüber hinaus erlaubt diese Gestaltung eine vorteilhafte Abführung des Steuerkabels 46 über das Kabelhüllenanschlussstück 58 nach vorne. Je nach Gestaltung des Vorsprungs 54 lassen sich hier unterschiedliche Winkelausrichtungen zum Abführen des Steuerkabels 46 bzw. des Kabelhüllenanschlussstücks 58 erreichen.

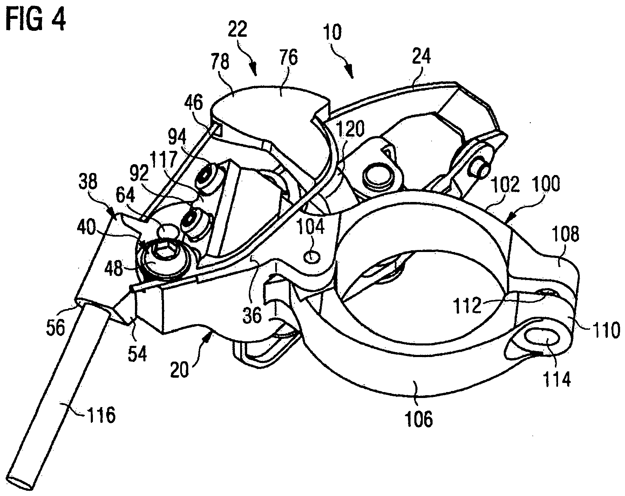

Figuren 4 bis 6 zeigen eine zweite Ausführungsform der Erfindung, die in ihrem Aufbau ähnlich dem ersten Ausführungsbeispiel der Erfindung ist. Zur Vermeidung von Wiederholungen werden im Folgenden lediglich die Unterschiede beschrieben, wobei - sofern zutreffend - auf die vorangehenden Bezugszeichen zurückgegriffen wird.

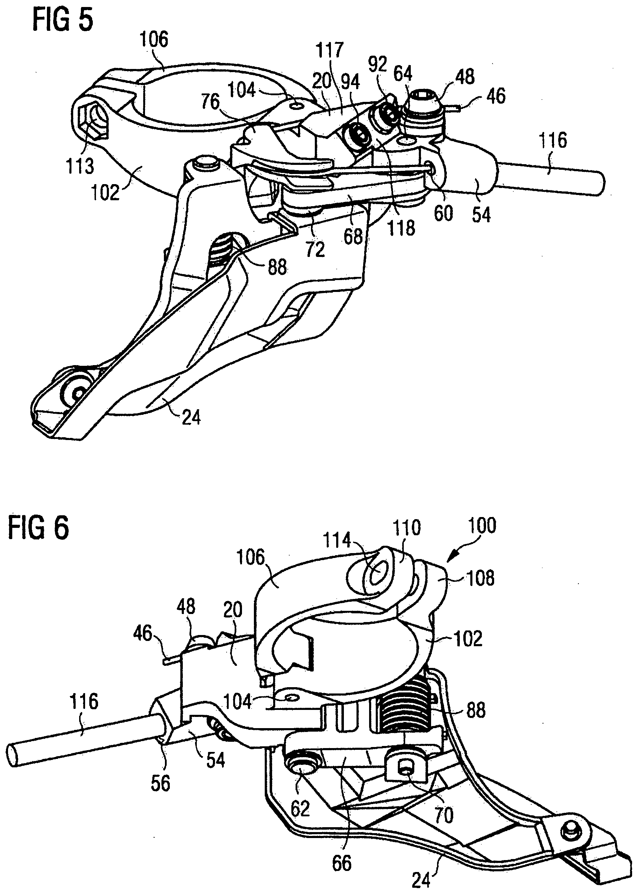

Ein wesentlicher Unterschied zu der ersten Ausführungsform der Erfindung besteht darin, dass das Rahmenfixierteil 20 mit einer Schelle 100 versehen ist, die zur Fixierung der vorderen Umwerfereinrichtung 10 an dem Sattelrohr 3 des Fahrrads 1 dient. Die Schelle 100 weist einen an dem Rahmenfixierteil 20 angeformten ersten Schellenabschnitt 102 sowie einen hierzu über einen Lagerzapfen 104 schwenkbeweglich gelagerten zweiten Schellenabschnitt 106 auf. Beide Schellenabschnitte 102 und 104 weisen einander zugewandte Fixierabschnitte 108 und 110 auf, wobei in dem Fixierabschnitt 108 eine Durchgangsbohrung 112 mit einer Sechskantaufnahme 113 zur Aufnahme einer Mutter (Figur 5) vorgesehen ist und wobei ferner in dem Fixierabschnitt 110 ein Langloch 114 vorgesehen ist. Das Langloch 114 dient zur Aufnahme eines Klemmbolzens (nicht gezeigt), der in eine in die Sechskantaufnahme 113 verdrehgesichert einlegbare Mutter (nicht gezeigt) einschraubbar ist.

Auch bei der Ausführungsform gemäß den Figuren 4 bis 6 ist am Rahmenfixierteil sowohl die Kabelfixiereinrichtung 40 mit dem Fixierbolzen 48 als auch die Kabelführungseinrichtung 38 mit einem seitlichen Vorsprung 54 vorgesehen. Allerdings ist bei dieser Anordnung der Fixierbolzen 48 unmittelbar in die als Kabelfunktionsfläche 36 ausgebildete Oberseite des Rahmenfixierteils 20 eingeschraubt. Der Vorsprung 54 erstreckt sich nicht von dieser Kabelfunktionsfläche 36 nach oben, sondern vom Rahmenfixierteil seitlich nach schräg unten, wie insbesondere aus den Figuren 5 und 6 erkennbar ist. Darüber hinaus stützt sich das Steuerkabel 64 unmittelbar mit seiner Kabelhülle 116 an der Vorderseite 56 kraftübertragend ab.

Ferner erkennt man, dass die beiden Einstellschrauben 92, 94 in einen Vorsprung 117 mit einer schräg ausgerichteten Fläche 118 am Rahmenfixierteil 20 eingeschraubt sind. Diese wirken in nicht näher gezeigter Weise zur Einstellung mit der Gelenkstrebe 66 zusammen.

Die Gelenkstrebe 66 ist wiederum H-förmig ausgebildet und nimmt die um den Lagerstift 70 herum angeordnete Torsionsfeder 88 im Bereich der Lagerung des Kettenkäfigs 24 auf, wie insbesondere in Figur 6 zu erkennen ist. Die andere Gelenkstrebe 68 der Gelenkanordnung 22 weist einen Ausleger 120 auf, an dem der Umlenkkörper 76 mit seiner Umlenkkurve 78 einstückig angeformt ist. Wiederum ist der Umlenkkörper 76 so ausgebildet, dass er das Steuerkabel 46 ausgehend von der Kabelfixiereinrichtung 40 um mehr als 180° führt und zur Kabelführungseinrichtung 38 leitet. Dabei ist anzumerken, dass der Vorsprung 117 mit seiner Rückseite zusätzlich das Steuerkabel 46 führt.

Auch diese Anordnung hat den Vorteil einer kompakten Ausgestaltung, wobei diejenigen Komponenten, die im Betrieb besonders belastet sind, an dem relativ massiv ausgebildeten Rahmenfixierteil vorgesehen sind.

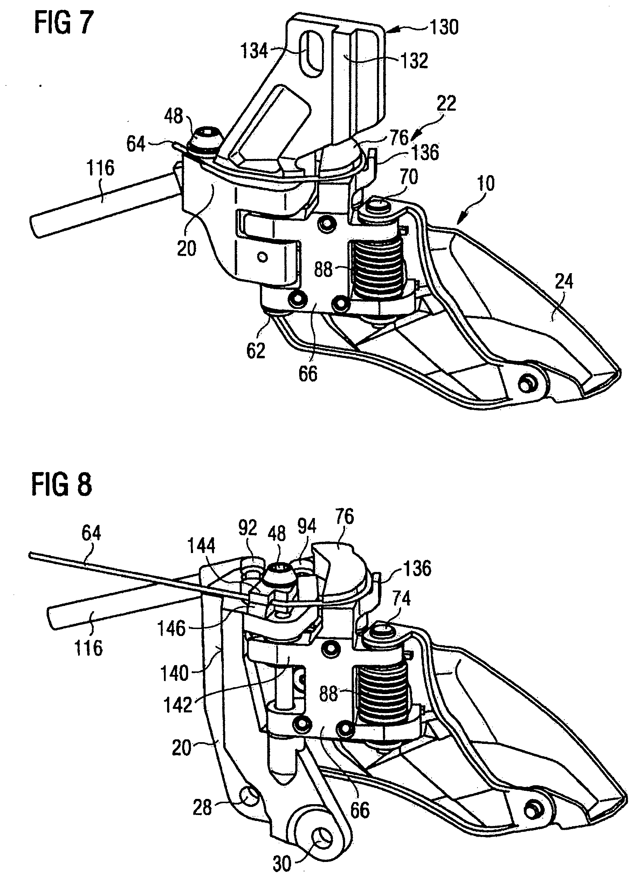

Die Ausführungsform gemäß Fig. 7 ist ähnlich der Ausführungsform gemäß den Figuren 4 bis 6 ausgebildet, wobei die Schelle 100 weggelassen wurde und stattdessen an dem Rahmenfixierteil 20 oberhalb der Gelenkanordnung 22 ein laschenartiger Vorsprung 130 angeordnet ist, der zur Fixierung an einer korrespondierenden Halterung eines Fahrradrahmens ausgebildet ist. Wiederum werden - soweit zutreffend - dieselben Bezugszeichen wie vorangehend verwendet.

Der Vorsprung 130 weist eine zum Rahmen hin vorstehende Profilleiste 132, die in eine korrespondierend ausgebildete Ausnehmung am Rahmen im Wesentlichen formschlüssig eingreift. Zur Fixierung am Rahmen kann ein nicht gezeigter Fixierbolzen in ein Langloch 134 eingesteckt und in eine korrespondierende Gewindebohrung oder über eine Mutter am Rahmen fixiert werden. Das Langloch 134 erlaubt ein gewisses vertikales Spiel zur Einstellung der Position der Umwerfereinrichtung 10 am Rahmen.

Die Ausgestaltung der Gelenkstrebe 66 entspricht im Wesentlichen der Ausgestaltung der Gelenkstrebe 66 gemäß dem Ausführungsbeispiel nach den Figuren 1 bis 3, wobei der Umlenkkörper 76 oberhalb des zentralen Bereichs der H-förmigen Gelenkstrebe 66 ausgebildet und an dieser einstückig angeformt ist. Ferner erkennt man, dass am Gelenkkörper ein nach oben offener Führungsvorsprung 136 vorgesehen ist. Der Vorsprung 130 ist an dem Rahmenfixierteil 20 derart angeformt, dass er mit seiner Kontur zusätzlich als Führung für das Steuerkabel 64 dient.

Figur 8 zeigt eine Anordnung einer weiteren erfindungsgemäßen Ausführungsform ähnlich der Gestaltung gemäß Figur 7, bei der in Anlehnung an die Ausführungsform nach Figuren 1 bis 3 die Fixierung des Rahmenfixierteils 20 am Fahrradrahmen über zwei Öffnungen 28, 30 erfolgt. Diese liegen jedoch, anders als bei der Ausführungsform gemäß Figuren 1 bis 3 in verschiedenen Ebenen. Das Rahmenfixierteil 20 ist bei der Ausführungsform gemäß Figur 7 mit einer Profilstufe 140 versehen, wobei zur Fixierung am Fahrradrahmen eine Halterung vorgesehen ist, die eine korrespondierende komplementäre Profilstufe aufweist, die formschlüssig mit der Profilstufe 140 in Eingriff bringbar ist.

Ferner erkennt man bei der Ausführungsform gemäß Figur 8, dass die Gelenkstrebe 66 wiederum H-förmig ausgestaltet ist. Der obere H-Schenkel 142 ist in seinem linken Bereich etwas verlängert und mit Schrägflächen versehen. Diese dienen als Angriffsflächen für die beiden Einstellschrauben 92, 94. Ferner erkennt man, dass über den Fixierbolzen 48 ein zusätzliches Klemmteil 144 zur Kabelklemmung auf einen Klemmvorsprung 146 klemmbar ist. Das Klemmteil 144 dient ferner zur gerichteten Kabelführung von der Klemmstelle hin zum Umlenkkörper 76, wie man am Kabelverlauf erkennen kann. Der Umlenkkörper 76 ist wiederum einstückig an einem Vorsprung 74 der Gelenkstrebe 66 angeformt.

Die Kabelführung entspricht im Wesentlichen der Kabelführung gemäß der mit Bezug auf die Ausführungsformen nach Figuren 4 bis 6 und nach Figur 7 beschriebenen Kabelführung. Auch bei dieser Ausführungsform gemäß Figur 8 sind die Komponenten zu Kabelfixierung und zur Kabelführung jeweils am Rahmenfixierteil 20 angebracht. Die Betätigung erfolgt in der beschriebenen Weise über die am Umlenkkörper 76 angreifenden Hebelkräfte.

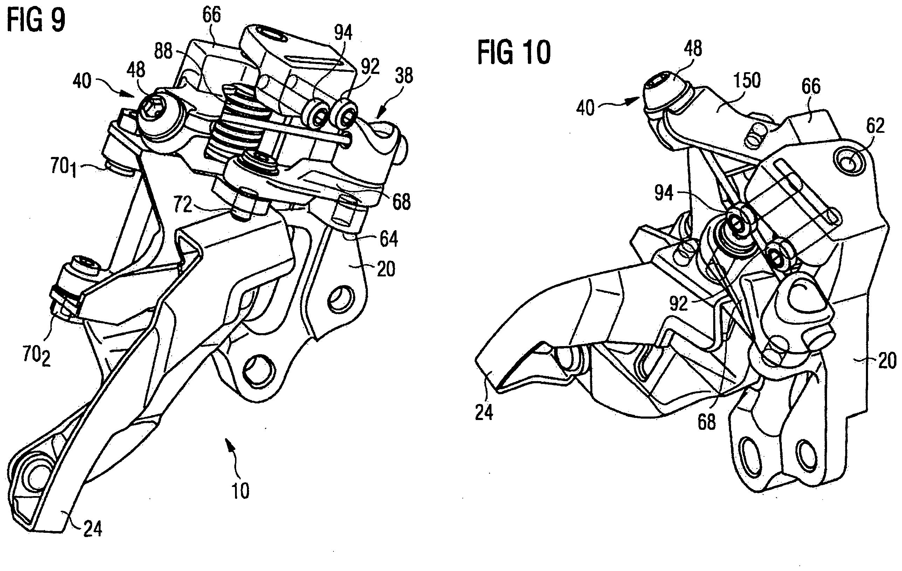

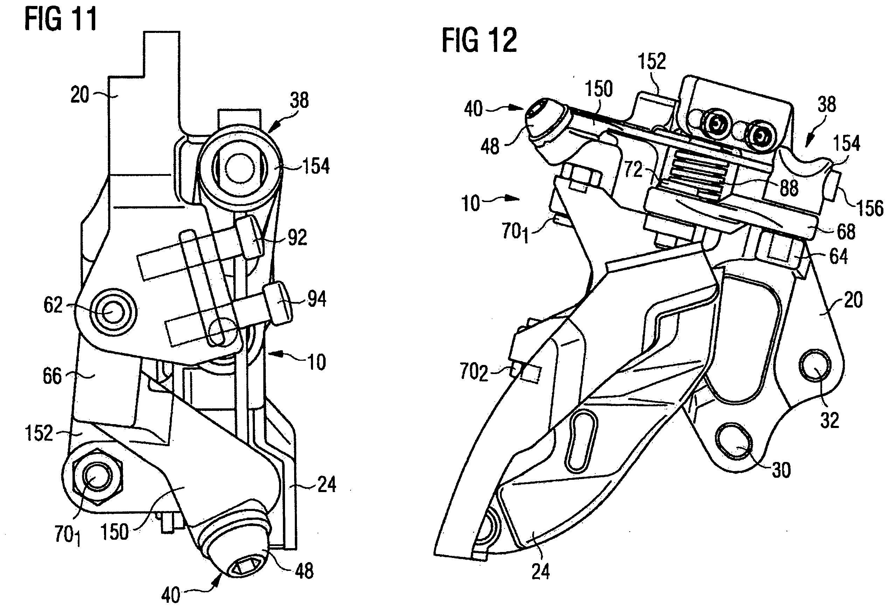

Die Ausführungsform gemäß den Figuren 9 bis 12 unterscheidet sich von den vorangehend beschriebenen Ausführungsformen im Wesentlichen in der Anordnung der Kabelfixiereinrichtung 40 und der Kabelführungseinrichtung 38. Die Kabelfixiereinrichtung 40 ist bei dieser Ausführungsform an einem Ausleger 150 an der Gelenkstrebe 66 angeordnet. Diese ist wiederum über den Lagerstift 62 am Rahmenfixierteil verschwenkbar gelagert und lagert ihrerseits über die im Wesentlichen zueinander fluchtenden Lagerstifte 70₁ und 70₂ verschwenkbar den Kettenkäfig 24. Die Gelenkstrebe 66 ist wiederum im Wesentlichen H-förmig ausgebildet, jedoch gestuft, wie man an der Stufe 152 in Figur 12 erkennen kann. Der Ausleger 150 erstreckt sich unterhalb der Stufe 152.

Die zweite Gelenkstrebe 68 ist ebenfalls gestuft ausgebildet und wird über den Lagerstift 64 relativ zum Rahmenfixierteil 20 verschwenkbar gelagert. Die verschwenkbare Lagerung relativ zum Kettenkäfig 24 erfolgt über den Lagerstift 72. Eine weitere Besonderheit dieser Ausgestaltung gegenüber den vorangehenden Ausführungsformen besteht darin, dass die Kabelführungseinrichtung 38 eine Buchse 154 umfasst, die einstückig mit dem Lagerstift 64 ausgebildet und mit diesem drehbar relativ zu der Gelenkstrebe 68 und dem Rahmenfixierteil 20 gelagert ist. Dadurch ist es möglich, die Kabelhülse 156 in gewünschter Ausrichtung vom Umwerfer 10 weg zu führen.

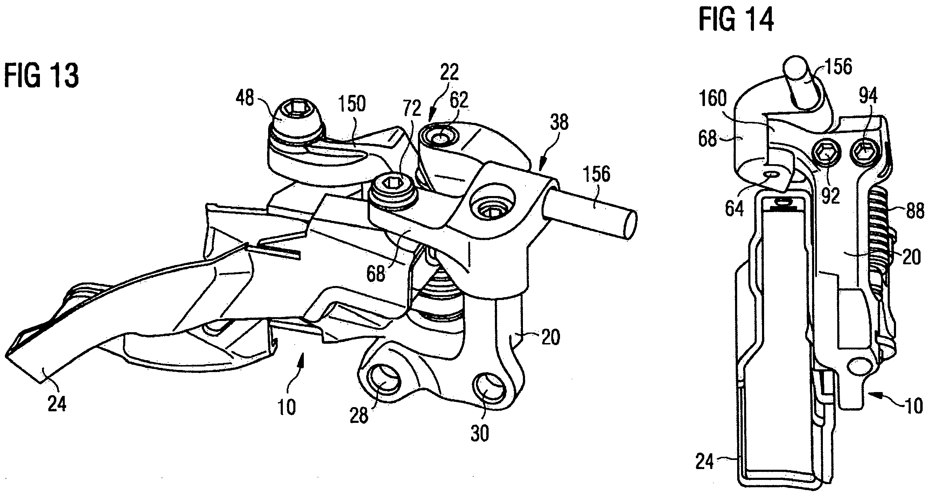

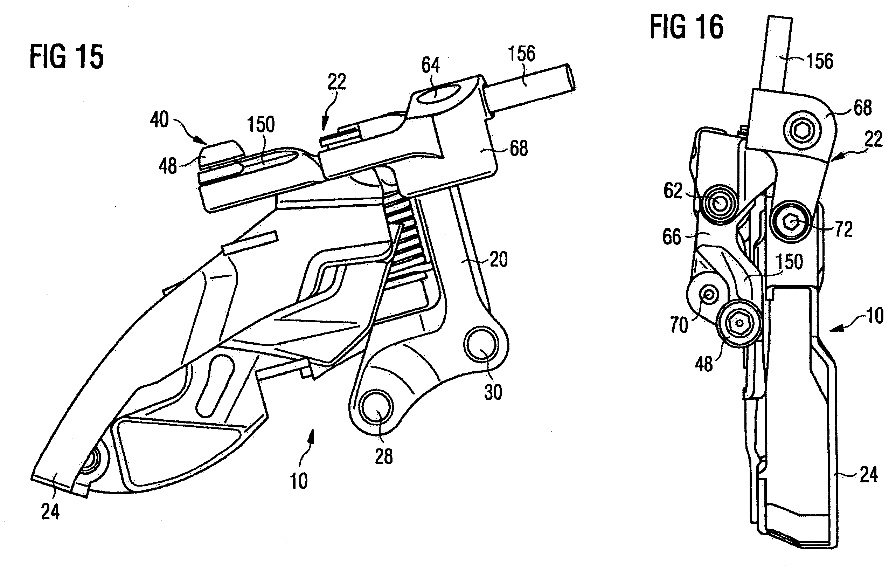

Die Ausführungsform gemäß den Figuren 13 bis 16 unterscheidet sich von der Ausführungsform gemäß den Figuren 9 bis 12. Sofern zutreffend werden dieselben Bezugszeichen wie vorangehend verwendet.

Bei der Ausführungsform gemäß Figuren 13 bis 16 ist das Rahmenfixierteil 20 wiederum mit zwei Öffnungen 28, 30 zur Fixierung am Fahrradrahmen versehen. Das Rahmenfixierteil trägt auch die beiden Einstellschrauben 92, 94, die nach vorne weisen (siehe Figur 14). Die Kabelführungseinrichtung 38 ist jedoch nicht am Rahmenfixierteil 20, sondern an der Gelenkstrebe 68 angeordnet. Diese umgreift gabelförmig, wie man in Figur 14 erkennt, einen vorderen Ausleger 160, der am Rahmenfixierteil 20 angeformt ist. Der den Ausleger 160 gabelförmig umgreifende Abschnitt der Gelenkstrebe 68 ist über den Lagerstift 64 schwenkbar relativ zum Rahmenfixierteil 20 gelagert. Die andere Gelenkstrebe 66 ist über die beiden Lagerstifte 62 und 70 schwenkbar relativ zum Rahmenfixierteil 20 bzw. zum Kettenkäfig 24 gelagert. Die Gelenkstrebe 66 weist einen integral angeformten Auslegerarm 150 auf, an dessen freiem Ende die Kabelfixiereinrichtung 40 mit dem Kabelfixierbolzen 48 angeordnet ist. Beim Ausüben einer Zugkraft auf das nicht gezeigte Steuerkabel wirkt diese Zugkraft auf das hintere freie Ende des Auslegerarms 150, an dem das Steuerkabel fixiert ist und verlagert so die gesamte Gelenkanordnung 22.

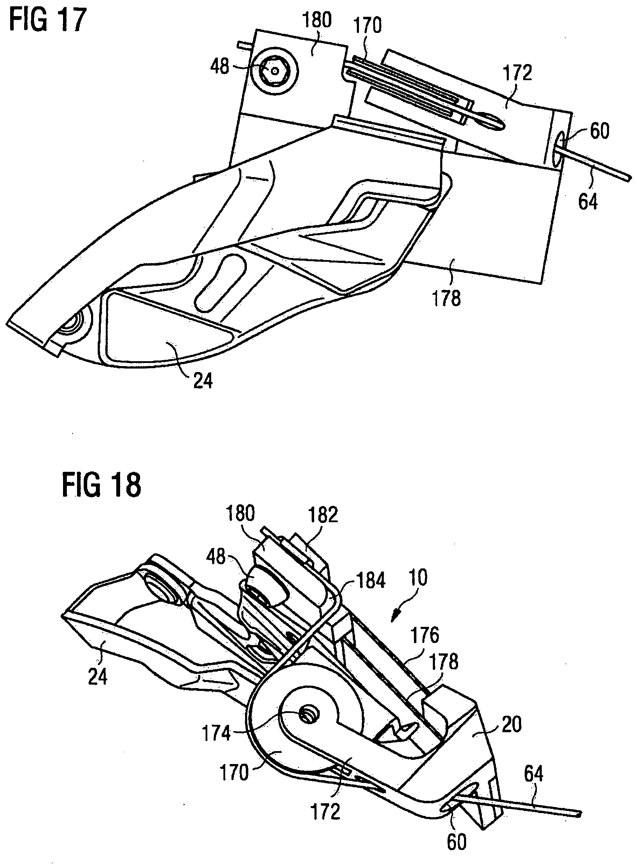

Figuren 17 und 18 zeigen eine weitere Ausführungsform der erfindungsgemäßen Umwerfereinrichtung 10. Die Umwerfereinrichtung 10 umfasst ein Rahmenfixierteil 20, das fest an dem Fahrradrahmen anbringbar ist, beispielsweise über eine nicht gezeigte Schelle. Das Rahmenfixierteil 20 ist über zwei Blattfedern 176, 178 mit einem relativ zum Rahmenfixierteil im Wesentlichen entlang einer Kreisbogenbahn verschwenkbaren Schwenkteil 182 verbunden. Das Schwenkteil 182 ist fest mit dem in Figur 17 und 18 gezeigten Kettenkäfig 24 verbunden. Das Schwenkteil 182 besitzt eine räumliche Ausrichtung relativ zu dem Rahmenfixierteil 20, die auch beim Verschwenken beibehalten wird.

Der Aufbau der Umwerfereinrichtung 10 ist wiederum derart, dass die Schwenkbewegung bei einer Montage der Umwerfereinrichtung 10 am Fahrradrahmen im Wesentlichen in einer horizontalen Ebene quer zum Fahrradrahmen entlang einer Kreisbogenbahn erfolgt.

Die beiden Blattfedern 176, 178 sind jeweils an beiden Enden fest eingespannt, d.h. jede der Blattfedern ist mit einem Ende fest am Rahmenfixierteil 20 und mit ihrem anderen Ende fest am Schwenkteil 182 angebracht. Hierfür sind jeweils Einspannlager vorgesehen.

Das Rahmenfixierteil 20 weist ferner eine Anlagefläche auf, mit der das Rahmenfixierteil an einer definierten Gegenanlagefläche (nicht gezeigt) des Fahrradrahmens zur Anlage gebracht und daran fixiert werden kann. Ferner weist das Rahmenfixierteil einen L-förmig abgewinkelten Auslegerarm 172 auf, an dessen Ende ein Gabelabschnitt vorgesehen ist. Im Hohlraum des Gabelabschnitts ist eine Umlenkrolle 170 über einen Lagerstift 174 drehbar gelagert. Der Auslegerarm 162 ist mit einer Führungsöffnung 60 versehen, durch die das Steuerkabel 64 geführt ist. Diese Führungsöffnung mündet in einen Durchgang, der sich an einer Ausgangsöffnung zur Umlenkrolle 170 hin öffnet. Das Steuerkabel 64 ist durch den Durchgang über die Ausgangsöffnung zur Umlenkrolle 170 hin geführt.

Am Schwenkteil 182 ist ein Lagerabschnitt 180 vorgesehen, an dem über eine Klemmschraube 48 eine Klemmlasche fixierbar ist. Der Lagerabschnitt 180 ist mit einer Führungsrundung 184 und einer Führungsschulter versehen. Das Steuerkabel 64 ist um die Umlenkrolle 170 herum zum Lagerabschnitt 180 hin geführt, und unter Anlage an der Führungsrundung 184 und der Führungsschulter hin zu der Klemmlasche geführt. Über die Klemmlasche und die Klemmschraube 48 ist das Steuerkabel 64 am Lagerabschnitt 180 fixiert.

Der Auslegerarm 172 ist winkelförmig ausgestaltet und besitzt eine derartige Länge L sowie Breite B, dass er die Umlenkrolle 170 in hinreichendem Abstand von dem Lagerabschnitt 180 lagert. Der Radius r der Umlenkrolle 166 ist derart bemessen, dass das Steuerkabel 64 die Umlenkrolle an einem Punkt P verlässt, der in einem Abstand d von wenigstens dem zweifachen Radius r der Umlenkrolle 170 zu dem Lagerabschnitt 180 liegt. Ferner ist die Länge L des Auslegerarms 162 so bemessen, dass das Steuerkabel 64 in der in den Figuren 17 und 18 gezeigten Ausgangsstellung im Wesentlichen orthogonal zu der Längserstreckungsrichtung der Blattfedern 176, 178 verläuft. Mit anderen Worten kann so über das Steuerkabel 64 auf das Schwenkteil 182 eine Betätigungskraft F ausgeübt werden, die im Wesentlichen senkrecht zu der Längserstreckungsrichtung der Blattfedern 176, 178 gerichtet ist.

Die Funktionsweise der vorderen Umwerfereinrichtung 10 gemäß den Figuren 17 und 18 wird im Folgenden beschrieben:
Ausgehend von der in den Figuren 17 und 18 gezeigten Ausgangsstellung wird über das Steuerkabel 64 eine Betätigungskraft F ausgeübt und das Steuerkabel 64 verlagert. Diese Betätigungskraft F wird über die Umlenkrolle 170 umgelenkt und auf den Lagerabschnitt 180 des Schwenkteils 182 übertragen. Infolgedessen kommt es zu einer Verlagerung des Schwenkteils 182 entgegen der Federkraft der Blattfedern 176 und 178, wobei diese elastisch deformiert werden. Die Verlagerung des Schwenkteils 182 folgt der Kreisbogenbahn S. Je nach Verlagerung des Steuerkabels 64 kann also das Schwenkteil 182 unter elastischer Deformation der Blattfedern 176 und 178 mehr oder weniger stark ausgelenkt werden. Zusammen mit dem Schwenkteil 182 bewegt sich der daran fixierte Kettenkäfig 25, so dass eine darin geführte Fahrradkette von einem Kettenrad zu einem weiteren Kettenrad zum Gangwechsel verlagert werden kann. Nach Abschluss des Gangwechsels wird das Schwenkteil 182 durch Arretieren des Steuerkabels 64 in bekannter Weise, beispielsweise an dem Schaltermechanismus 5, in seiner erreichten Position festgehalten. Soll zurückgeschaltet werden, so wird das Steuerkabel 64 über den Schaltmechanismus 5 freigegeben. In Reaktion darauf können sich die Blattfeder 176 und 178 wieder in ihre Ausgangsstellung entspannen, wobei das Schwenkteil 182 zusammen mit dem Kettenkäfig 24 zurück bewegt wird.

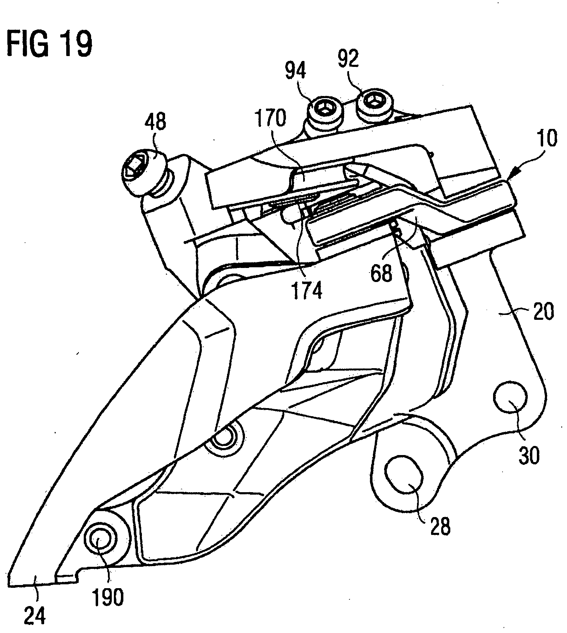

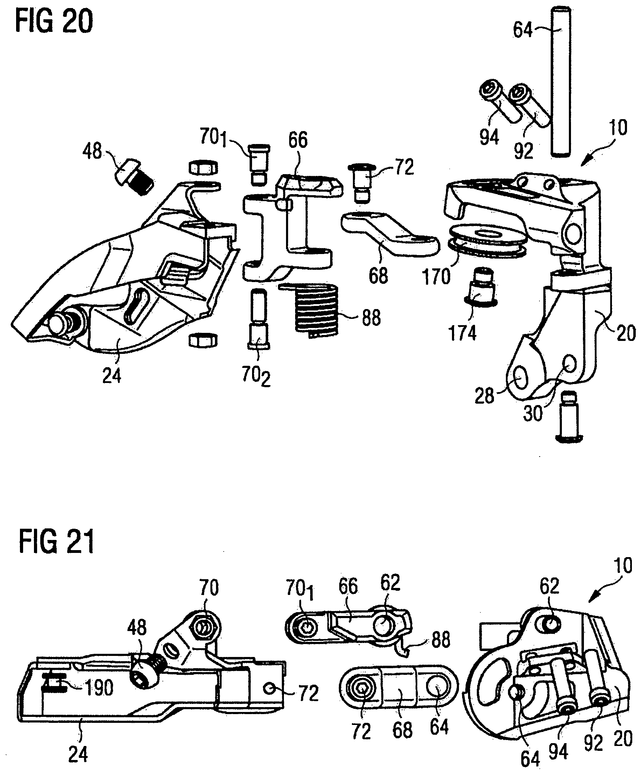

Schließlich zeigen die Figuren 19 bis 21 eine weitere Ausführungsform der Erfindung, wobei Figur 19 eine Vorderansicht dieser Ausführungsform und Figuren 20 und 21 jeweils Explosionsansichten sind. Wiederum werden, sofern zutreffend, dieselben Bezugszeichen verwendet, wie vorangehend.

Bei dieser Ausführungsform ist am Rahmenfixierteil eine Umlenkrolle 170 über einen Lagerstift 170 drehbar gelagert, die zur Kabelführung dient. Die beiden Gelenkstreben 66, 68 sind gestuft ausgebildet, und über die Lagerstifte 62, 64, 70 und 72 schwenkbar zu dem Rahmenfixierteil 20 bzw. dem Kettenkäfig 24 gelagert. Auch die Kabelführungseinrichtung 38 ist am Rahmenfixierteil 20 ausgebildet. Die Kabelfixiereinrichtung ist hingegen am Kettenkäfig vorgesehen.

Die vorstehenden Ausführungsformen der Erfindung zeigen Konzepte für vordere Umwerfereinrichtungen, die eine "Side-Swing"-Anordnung in kompakter Bauform erstellen lassen, wobei eine große Variabilität hinsichtlich der Ableitung des Steuerkabels von der Umwerfereinrichtung zum Fahrradrahmen möglich ist. Die Ausführungsformen lassen sich untereinander kombinieren. So kann beispielsweise unabhängig von der Fixierung des Steuerkabels oder der Führung des Steuerkabels eine Befestigung am Fahrradrahmen wahlweise oberhalb oder unterhalb der Gelenkanordnung oder vermittels einer Schelle erfolgen.

## Patentansprüche

1. Vordere Umwerfereinrichtung (10) für eine Fahrradkettenschaltung, umfassend:
- ein Rahmenfixierteil (20) zur Anbringung an einem Fahrradrahmen,
- eine relativ zum Rahmenfixierteil (20) verschwenkbare Gelenkanordnung (22), und
- einen über die verschwenkbare Gelenkanordnung (22) relativ zu dem Rahmenfixierteil (20) verschwenkbaren Kettenkäfig (24) zum Führen und Verschwenken der Fahrradkette,
wobei die Gelenkanordnung (22) wenigstens zwei Gelenkstreben (66, 68) umfasst, die relativ zu dem Rahmenfixierteil (20) sowie relativ zu dem Kettenkäfig (24) um Lagerstifte (62, 64, 70, 72) und diesen Lagerstiften zugeordnete Schwenkachsen drehbar verlagerbar sind, wobei die Schwenkachsen im Wesentlichen parallel zueinander verlaufen im montierten Zustand der Umwerfereinrichtung (10) an einem Fahrrad im Wesentlichen vertikal ausgerichtet sind oder zu einer vertikal verlaufenden Achse um maximal 30° geneigt sind, wobei die Umwerfereinrichtung (10) über ein Steuerkabel (46) ansteuerbar ist, wobei das Steuerkabel (46) über eine an dem Rahmenfixierteil vorgesehene Kabelführungseinrichtung (38) relativ zum Fahrradrahmen führbar ist,
dass ferner das Steuerkabel (46) über eine Kabelfixiereinrichtung (40) an der Umwerfereinrichtung (10) festlegbar ist, und
dass das Steuerkabel (46) über eine Kabelumlenkeinrichtung (76) zwischen der Kabelfixiereinrichtung (40) und der Kabelführungseinrichtung (38) geführt ist, wobei die Kabelumlenkeinrichtung (76) an einer der Gelenkstreben (66) der Gelenkanordnung (22) oder an dem Kettenkäfig (24) angeordnet ist, **dadurch gekennzeichnet, dass** die Kabelfixiereinrichtung (40) am Rahmenfixierteil vorgesehen ist.

2. Vordere Umwerfereinrichtung (10) für eine Fahrradkettenschaltung, umfassend:- ein Rahmenfixierteil (20) zur Anbringung an einem Fahrradrahmen,-eine relativ zum Rahmenfixierteil (20) verschwenkbare Gelenkanordnung (22), und- einen über die verschwenkbare Gelenkanordnung (22) relativ zu dem Rahmenfixierteil (20) verschwenkbaren Kettenkäfig (24) zum Führen und Verschwenken der Fahrradkette,wobei die Gelenkanordnung (22) wenigstens zwei Gelenkstreben (66, 68) umfasst, die relativ zu dem Rahmenfixierteil (20) sowie relativ zu dem Kettenkäfig (24) um Lagerstifte (62, 64, 70, 72) und diesen Lagerstiften zugeordnete Schwenkachsen drehbar verlagerbar sind, wobei die Schwenkachsen im Wesentlichen parallel zueinander verlaufen im montierten Zustand der Umwerfereinrichtung (10) an einem Fahrrad im Wesentlichen vertikal ausgerichtet sind oder zu einer vertikal verlaufenden Achse um maximal 30° geneigt sind, wobei die Umwerfereinrichtung (10) über ein Steuerkabel (46) ansteuerbar ist, **dadurch gekennzeichnet, dass** das Steuerkabel (46) über eine an Rahmenfixier- teil (20) vorgesehene Kabelführungseinrichtung (42, 170) relativ zum Fahrradrahmen führbar ist, und
dass das Steuerkabel (46) über eine Kabelfixiereinrichtung (40) festlegbar ist, wobei die Kabelfixiereinrichtung (40) am Kettenkäfig (24) vorgesehen ist.

3. Vordere Umwerfereinrichtung (10) für eine Fahrradkettenschaltung, umfassend:- ein Rahmenfixierteil (20) zur Anbringung an einem Fahrradrahmen,-eine relativ zum Rahmenfixierteil (20) verschwenkbare Gelenkanordnung (22), und- einen über die verschwenkbare Gelenkanordnung (22) relativ zu dem Rahmenfixierteil (20) verschwenkbaren Kettenkäfig (24) zum Führen und Verschwenken der Fahrradkette,wobei die Gelenkanordnung (22) wenigstens zwei Gelenkstreben (66, 68) umfasst, die relativ zu dem Rahmenfixierteil (20) sowie relativ zu dem Kettenkäfig (24) um Lagerstifte (62, 64, 70, 72) und diesen Lagerstiften zugeordnete Schwenkachsen drehbar verlagerbar sind, wobei die Schwenkachsen im Wesentlichen parallel zueinander verlaufen im montierten Zustand der Umwerfereinrichtung (10) an einem Fahrrad im Wesentlichen vertikal ausgerichtet sind oder zu einer vertikal verlaufenden Achse um maximal 30° geneigt sind, wobei die Umwerfereinrichtung (10) über ein Steuerkabel (46) ansteuerbar ist, **dadurch gekennzeichnet, dass** das Steuerkabel (46) über eine an dem Kettenkäfig (24) vorgesehene Kabelführungseinrichtung relativ zum Fahrradrahmen führbar ist, und
dass das Steuerkabel (46) über eine Kabelfixiereinrichtung (40) festlegbar ist, wobei die Kabelfixiereinrichtung (40) am Kettenkäfig oder am Rahmenfixierteil (20) vorgesehen ist.

4. Vordere Umwerfereinrichtung (10) nach einem der vorangehenden Ansprüche,
**dadurch gekennzeichnet, dass** die Kabelfixiereinrichtung (40) eine Klemmbacke (144) aufweist, mit der das Steuerkabel (46) über einen Fixierbolzen (48) fixierbar ist.

5. Vordere Umwerfereinrichtung (10) nach einem der vorangehenden Ansprüche,
**dadurch gekennzeichnet, dass** das Rahmenfixierteil (20) eine Kabelfunktionsfläche (36) aufweist, an der die Kabelfixiereinrichtung (40) und/oder die Kabelführungseinrichtung (38) ausgebildet sind.

6. Vordere Umwerfereinrichtung (10) nach einem der vorangehenden Ansprüche,
**dadurch gekennzeichnet, dass** das Rahmenfixierteil (20) zur Fixierung am Fahrradrahmen mit Befestigungsöffnungen (28, 30) versehen ist, die im Wesentlichen oberhalb oder im Wesentlichen unterhalb eines Lagerabschnitts (34) zur drehbaren Lagerung einer der Gelenkstreben (66) angeordnet ist.

7. Vordere Umwerfereinrichtung (10) nach Anspruch 6,
**dadurch gekennzeichnet, dass** wenigstens eine der Befestigungsöffnungen (28, 30) als Langloch ausgebildet ist, über das die Umwerfereinrichtung (10) relativ zum Fahrradrahmen bei der Fixierung lageverstellbar ist.

8. Vordere Umwerfereinrichtung (10) nach Anspruch 6 oder Anspruch 7,
**dadurch gekennzeichnet, dass** der Lagerabschnitt eine Ausnehmung (34) aufweist, in der ein freies Ende einer der Gelenkstreben (66) über einen Lagestift (62) schwenkbar aufgenommen ist.

9. Vordere Umwerfereinrichtung (10) nach Anspruch 1,
**dadurch gekennzeichnet, dass** die Kabelumlenkeinrichtung einen Umlenkkörper (76) umfasst, der zum Führen und Umlenken des Steuerkabels (46) eine Umlenkkurve (78) aufweist.

10. Vordere Umwerfereinrichtung (10) nach Anspruch 9,
**dadurch gekennzeichnet, dass** die Umlenkkurve (78) zum Führen des Steuerkabels (46) mit wenigstens einem vorspringenden Randabschnitt (80, 82) oder/und mit einem zumindest teilweise geschlossenen Führungstunnel (84) versehen ist.

11. Vordere Umwerfereinrichtung nach Anspruch 9 oder Anspruch 10,
**dadurch gekennzeichnet, dass** sich die Umlenkkurve (78) über einen Winkel von wenigstens 90°, vorzugsweise über einen Winkel von wenigstens 180° erstreckt.

12. Vordere Umwerfereinrichtung (10) nach einem der vorangehenden Ansprüche,
**dadurch gekennzeichnet, dass** wenigstens einem Lagerstift (62) eine Aufnahme (44) zur Führung des Steuerkabels (46) zugeordnet ist, wobei die Aufnahme (44) vorzugsweise L-förmig zur einseitigen Führung oder U-förmig zur zweiseitigen Führung ausgebildet ist.

13. Vordere Umwerfereinrichtung (10) nach einem der vorangehenden Ansprüche,
**dadurch gekennzeichnet, dass** eine erste Gelenkstrebe (66) der Gelenkstreben mit einem zentralen Gelenkstrebenabschnitt und zwei vom zentralen Gelenkstrebenabschnitt in entgegengesetzte Richtungen vorspringenden Lagergabeln ausgebildet ist.

14. Vordere Umwerfereinrichtung nach Anspruch 13,
**dadurch gekennzeichnet, dass** die Lagergabeln im Wesentlichen zueinander fluchtend, sodass die erste Gelenkstrebe (66) der Gelenkstreben im wesentlichen H-förmig ausgebildet ist, wobei an einem zentralen Vorsprung (74) der ersten Gelenkstrebe (66) der Umlenkkörper (76) angeordnet ist.

15. Vordere Umwerfereinrichtung nach einem der Ansprüche 13 oder 14,
**dadurch gekennzeichnet, dass** die erste Gelenkstrebe (66) der Gelenkstreben mit einem Ausleger (120) ausgebildet ist, an dem der Umlenkkörper (76) angeordnet ist.

16. Vordere Umwerfereinrichtung (10) nach Anspruch 1,
**dadurch gekennzeichnet, dass** das Steuerkabel (46) am Rahmenfixierteil (20) vermittels der Kabelfixiereinrichtung (40) fixiert ist, wobei das Steuerkabel (46) ausgehend vom Rahmenfixierteil (20) über den an einer der Gelenkstreben (66) angeordneten Umlenkkörper (76) kraftübertragend geführt ist, wobei das Steuerkabel (46) ausgehend von dem Umlenkkörper (76) zur Kabelführungseinrichtung (38) und von dieser zum Fahrradrahmen hin geführt ist.

## Claims

1. Front derailleur device (10) for a bicycle chain shift, comprising:
- a frame fixing part (20) for attachment to a bicycle frame,
- a hinge arrangement (22) which is pivotable relative to the frame fixing part (20), and
- a chain cage (24) which is pivotable relative to the frame fixing part (20) via the pivotable hinge arrangement (22) for guiding and pivoting of the bicycle chain,
wherein the hinge arrangement (22) comprises at least two hinged struts (66, 68) which can be mounted rotatably relative to the frame fixing part (20) and relative to the chain cage (24) about bearing pins (62, 64, 70, 72) and pivot axes assigned to these bearing pins, wherein the pivot axes run substantially parallel to each other and in the mounted state of the derailleur device (10) on a bicycle wheel are oriented substantially vertically or are tilted by maximum 30° to a vertically running axis, wherein the derailleur device (10) can be actuated via a control cable (46),
wherein the control cable (46) can be guided relative to the bicycle frame via a cable guide device (38) provided on the frame fixing part,
that furthermore the control cable (46) can be fixed to the derailleur device (10) via a cable fixing device (40), and
that the control cable (46) is guided between the cable fixing device (40) and the cable guide device (38) via a cable deflecting device (76), wherein the cable deflecting device (76) is arranged on one of the hinged struts (66) of the hinge arrangement (22) or on the chain cage (24), **characterized in that** the cable fixing device (40) is provided on the frame fixing part.

2. Front derailleur device (10) for a bicycle chain shift, comprising:
- a frame fixing part (20) for attachment to a bicycle frame,
- a hinge arrangement (22) which is pivotable relative to the frame fixing part (20), and
- a chain cage (24) which is pivotable relative to the frame fixing part (20) via the pivotable hinge arrangement (22) for guiding and pivoting of the bicycle chain,
wherein the hinge arrangement (22) comprises at least two hinged struts (66, 68) which can be mounted rotatably relative to the frame fixing part (20) and relative to the chain cage (24) about bearing pins (62, 64, 70, 72) and pivot axes assigned to these bearing pins, wherein the pivot axes run substantially parallel to each other and in the mounted state of the derailleur device (10) on a bicycle wheel are oriented substantially vertically or are tilted by maximum 30° to a vertically running axis, wherein the derailleur device (10) can be actuated via a control cable (46),
**characterized in that** the control cable (46) can be guided relative to the bicycle frame via a cable guide device (42, 170) provided on the frame fixing part (20), and
**in that** the control cable (46) can be fixed via a cable fixing device (40), wherein the cable fixing device (40) is provided on the chain cage (24).

3. Front derailleur device (10) for a bicycle chain shift, comprising:
- a frame fixing part (20) for attachment to a bicycle frame,
- a hinge arrangement (22) which is pivotable relative to the frame fixing part (20), and
- a chain cage (24) which is pivotable relative to the frame fixing part (20) via the pivotable hinge arrangement (22) for guiding and pivoting of the bicycle chain,
wherein the hinge arrangement (22) comprises at least two hinged struts (66, 68) which can be mounted rotatably relative to the frame fixing part (20) and relative to the chain cage (24) about bearing pins (62, 64, 70, 72) and pivot axes assigned to these bearing pins, wherein the pivot axes run substantially parallel to each other and in the mounted state of the derailleur device (10) on a bicycle wheel are oriented substantially vertically or are tilted by maximum 30° to a vertically running axis, wherein the derailleur device (10) can be actuated via a control cable (46),
**characterized in that** the control cable (46) can be guided relative to the bicycle frame via a cable guide device provided on the chain cage (24), and
**in that** the control cable (46) can be fixed via a cable fixing device (40), wherein the cable fixing device (40) is provided on the chain cage or on the frame fixing part (20) .

4. Front derailleur device (10) according to any of the
preceding claims,
**characterized in that** the cable fixing device (40) has a clamping jaw (144) with which the control cable (46) can be fixed via a fixing bolt (48).

5. Front derailleur device (10) according to any of the
preceding claims,
**characterized in that** the frame fixing part (20) has a cable function face (36) on which the cable fixing device (40) and/or the cable guide device (38) are formed.

6. Front derailleur device (10) according to any of the
preceding claims,
**characterized in that** for fixing to the bicycle frame, the frame fixing part (20) is provided with fixing openings (28, 30) which are arranged substantially above or substantially below a bearing portion (34) for rotatable mounting of one of the hinged struts (66).

7. Front derailleur device (10) according to Claim 6,
**characterized in that** at least one of the fixing openings (28, 30) is configured as a slot via which the position of the derailleur device (10) relative to the bicycle frame can be adjusted during fixing.

8. Front derailleur device (10) according to Claim 6
or Claim 7,
**characterized in that** the bearing portion has a recess (34) in which a free end of one of the hinged struts (66) is received pivotably via a bearing pin (62).

9. Front derailleur device (10) according to Claim 1,
**characterized in that** the cable deflecting device comprises a deflecting body (76) which has a deflecting curve (78) for guiding and deflecting the control cable (46) .

10. Front derailleur device (10) according to Claim 9,
**characterized in that** for guiding the control cable (46), the deflecting curve (78) is provided with at least one protruding edge portion (80, 82) or/and with an at least partially closed guide tunnel (84).

11. Front derailleur device according to Claim 9 or
Claim 10,
**characterized in that** the deflecting curve (78) extends over an angle of at least 90°, preferably over an angle of at least 180°.

12. Front derailleur device (10) according to any of the
preceding claims,
**characterized in that** for guiding the control cable (46), a receiver (44) is assigned to at least one bearing pin (62), wherein the receiver (44) is preferably configured L-shaped for unilateral guidance or U-shaped for bilateral guidance.

13. Front derailleur device (10) according to any of the
preceding claims,
**characterized in that** a first hinged strut (66) of the hinged struts is configured with a central hinged strut portion and two bearing forks protruding from the central hinged strut portion in opposite directions.

14. Front derailleur device according to Claim 13,
**characterized in that** the bearing forks are configured substantially aligned to each other so that the first hinged strut (66) of the hinged struts is configured substantially H-shaped, wherein the deflecting body (76) is arranged on a central protrusion (74) of the first hinged strut (66).

15. Front derailleur device according to either of
Claims 13 and 14,
**characterized in that** the first hinged strut (66) of the hinged struts is configured with an arm (120) on which the deflecting body (76) is arranged.

16. Front derailleur device (10) according to Claim 1,
**characterized in that** the control cable (46) is fixed to the frame fixing part (20) by means of the cable fixing device (40), wherein the control cable (46) starting from the frame fixing part (20) is guided force-transmissively via the deflecting body (76) arranged on one of the hinged struts (66), wherein the control cable (46) starting from the deflecting body (76) is guided to the cable guide device (38) and from this to the bicycle frame.

## Revendications

1. Dispositif de dérailleur avant (10) pour un dérailleur à chaîne de bicyclette, comprenant :
- une partie de fixation de cadre (20) destinée à être montée sur un cadre de bicyclette,
- un agencement d'articulation (22) pouvant pivoter par rapport à la partie de fixation de cadre (20), et
- une cage de chaîne (24) pouvant pivoter par rapport à la partie de fixation de cadre (20) par le biais de l'agencement d'articulation (22) pouvant pivoter pour guider et faire pivoter la chaîne de bicyclette,
l'agencement d'articulation (22) comprenant au moins deux barres d'articulation (66, 68) qui peuvent être déplacées en rotation par rapport à la partie de fixation de cadre (20) ainsi que par rapport à la cage de chaîne (24) autour de goupilles de palier (62, 64, 70, 72) et d'axes de pivotement associés à ces goupilles de palier, les axes de pivotement s'étendant essentiellement parallèlement les uns aux autres et, dans l'état monté du dispositif de dérailleur (10) sur une bicyclette étant orientés essentiellement verticalement ou étant inclinés au maximum de 30° par rapport à un axe s'étendant verticalement, le dispositif de dérailleur (10) pouvant être commandé par le biais d'un câble de commande (46), le câble de commande (46) pouvant être guidé par rapport au cadre de bicyclette par le biais d'un dispositif de guidage de câble (38) prévu au niveau de la partie de fixation de cadre,
en ce que le câble de commande (46) peut en outre être fixé au dispositif de dérailleur (10) par le biais d'un dispositif de fixation de câble (40), et
en ce que le câble de commande (46) est guidé par le biais d'un dispositif de renvoi de câble (76) entre le dispositif de fixation de câble (40) et le dispositif de guidage de câble (38), le dispositif de renvoi de câble (76) étant disposé au niveau de l'une des barres d'articulation (66) de l'agencement d'articulation (22) ou au niveau de la cage de chaîne (24),
**caractérisé en ce que** le dispositif de fixation de câble (40) est prévu au niveau de la partie de fixation de cadre.

2. Dispositif de dérailleur avant (10) pour un dérailleur à chaîne de bicyclette, comprenant :
- une partie de fixation de cadre (20) destinée à être montée sur un cadre de bicyclette,
- un agencement d'articulation (22) pouvant pivoter par rapport à la partie de fixation de cadre (20), et
- une cage de chaîne (24) pouvant pivoter par rapport à la partie de fixation de cadre (20) par le biais de l'agencement d'articulation (22) pouvant pivoter pour guider et faire pivoter la chaîne de bicyclette,
l'agencement d'articulation (22) comprenant au moins deux barres d'articulation (66, 68) qui peuvent être déplacées en rotation par rapport à la partie de fixation de cadre (20) ainsi que par rapport à la cage de chaîne (24) autour de goupilles de palier (62, 64, 70, 72) et d'axes de pivotement associés à ces goupilles de palier, les axes de pivotement s'étendant essentiellement parallèlement les uns aux autres, dans l'état monté du dispositif de dérailleur (10) sur une bicyclette étant orientés essentiellement verticalement ou étant inclinés au maximum de 30° par rapport à un axe s'étendant verticalement, le dispositif de dérailleur (10) pouvant être commandé par le biais d'un câble de commande (46), **caractérisé en ce que** le câble de commande (46) peut être guidé par rapport au cadre de bicyclette par le biais d'un dispositif de guidage de câble (42, 170) prévu au niveau de la partie de fixation de cadre (20), et
**en ce que** le câble de commande (46) peut être fixé par le biais d'un dispositif de fixation de câble (40), le dispositif de fixation de câble (40) étant prévu au niveau de la cage de chaîne (24).

3. Dispositif de dérailleur avant (10) pour un dérailleur à chaîne de bicyclette, comprenant :
- une partie de fixation de cadre (20) destinée à être montée sur un cadre de bicyclette,
- un agencement d'articulation (22) pouvant pivoter par rapport à la partie de fixation de cadre (20), et
- une cage de chaîne (24) pouvant pivoter par rapport à la partie de fixation de cadre (20) par le biais de l'agencement d'articulation (22) pouvant pivoter pour guider et faire pivoter la chaîne de bicyclette,
l'agencement d'articulation (22) comprenant au moins deux barres d'articulation (66, 68) qui peuvent être déplacées en rotation par rapport à la partie de fixation de cadre (20) ainsi que par rapport à la cage de chaîne (24) autour de goupilles de palier (62, 64, 70, 72) et d'axes de pivotement associés à ces goupilles de palier, les axes de pivotement s'étendant essentiellement parallèlement les uns aux autres, dans l'état monté du dispositif de dérailleur (10) sur une bicyclette étant orientés essentiellement verticalement ou étant inclinés au maximum de 30° par rapport à un axe s'étendant verticalement, le dispositif de dérailleur (10) pouvant être commandé par le biais d'un câble de commande (46), **caractérisé en ce que** le câble de commande (46) peut être guidé par rapport au cadre de bicyclette par le biais d'un dispositif de guidage de câble prévu au niveau de la cage de chaîne (24) et
**en ce que** le câble de commande (46) peut être fixé par le biais d'un dispositif de fixation de câble (40), le dispositif de fixation de câble (40) étant prévu au niveau de la cage de chaîne ou au niveau de la partie de fixation de cadre (20).

4. Dispositif de dérailleur avant (10) selon l'une quelconque des revendications précédentes, **caractérisé en ce que** le dispositif de fixation de câble (40) présente une mâchoire de serrage (144) à laquelle le câble de commande (46) peut être fixé par le biais d'un boulon de fixation (48).

5. Dispositif de dérailleur avant (10) selon l'une quelconque des revendications précédentes, **caractérisé en ce que** la partie de fixation de cadre (20) présente une surface fonctionnelle de câble (36) au niveau de laquelle sont réalisés le dispositif de fixation de câble (40) et/ou le dispositif de guidage de câble (38).

6. Dispositif de dérailleur avant (10) selon l'une quelconque des revendications précédentes, **caractérisé en ce que** la partie de fixation de cadre (20) est pourvue d'ouvertures de fixation (28, 30) pour la fixation au cadre de bicyclette, lesquelles sont disposées essentiellement au-dessus ou essentiellement en dessous d'une portion de palier (34) pour le support sur palier pivotant de l'une des barres d'articulation (66).

7. Dispositif de dérailleur avant (10) selon la revendication 6, **caractérisé en ce qu'**au moins l'une des ouvertures de fixation (28, 30) est réalisée sous forme de trou oblong par le biais duquel la position du dispositif de dérailleur (10) peut être réglée par rapport au cadre de bicyclette lors de la fixation.

8. Dispositif de dérailleur avant (10) selon la revendication 6 ou la revendication 7, **caractérisé en ce que** la portion de palier présente un évidement (34) dans lequel une extrémité libre de l'une des barres d'articulation (66) est reçue de manière pivotante par le biais d'une goupille de palier (62).

9. Dispositif de dérailleur avant (10) selon la revendication 1, **caractérisé en ce que** le dispositif de renvoi de câble comprend un corps de renvoi (76) qui présente une courbe de renvoi (78) pour le guidage et le renvoi du câble de commande (46) .

10. Dispositif de dérailleur avant (10) selon la revendication 9, **caractérisé en ce que** la courbe de renvoi (78) pour guider le câble de commande (46) est pourvue d'au moins une portion de bord saillante (80, 82) et/ou d'un tunnel de guidage (84) au moins partiellement fermé.

11. Dispositif de dérailleur avant selon la revendication 9 ou la revendication 10, **caractérisé en ce que** la courbe de renvoi (78) s'étend sur un angle d'au moins 90°, de préférence sur un angle d'au moins 180°.

12. Dispositif de dérailleur avant (10) selon l'une quelconque des revendications précédentes, **caractérisé en ce qu'**un logement (44) pour guider le câble de commande (46) est associé à au moins une goupille de palier (62), le logement (44) étant de préférence réalisé en forme de L pour un guidage unilatéral ou en forme de U pour un guidage bilatéral.

13. Dispositif de dérailleur avant (10) selon l'une quelconque des revendications précédentes, **caractérisé en ce qu'**une première barre d'articulation (66) des barres d'articulation est réalisée avec une portion de barre d'articulation centrale et deux fourches de palier saillant depuis la portion de barre d'articulation centrale dans des directions opposées.

14. Dispositif de dérailleur avant selon la revendication 13, **caractérisé en ce que** les fourches de palier sont essentiellement en affleurement l'une avec l'autre de telle sorte que la première barre d'articulation (66) des barres d'articulation soit réalisée essentiellement en forme de H, le corps de renvoi (76) étant disposé au niveau d'une saillie centrale (74) de la première barre d'articulation (66).

15. Dispositif de dérailleur avant selon l'une quelconque des revendications 13 et 14, **caractérisé en ce que** la première barre d'articulation (66) des barres d'articulation est réalisée avec un bras de potence (120) au niveau duquel est disposé le corps de renvoi (76).

16. Dispositif de dérailleur avant (10) selon la revendication 1, **caractérisé en ce que** le câble de commande (46) est fixé au niveau de la partie de fixation de cadre (20) au moyen du dispositif de fixation de câble (40), le câble de commande (46) étant guidé avec transmission de force à partir de la partie de fixation de cadre (20) par le biais du corps de renvoi (76) disposé au niveau de l'une des barres d'articulation (66), le câble de commande (46) étant guidé à partir du corps de renvoi (76) jusqu'au dispositif de guidage de câble (38) et depuis celui-ci jusqu'au cadre de bicyclette.
